(19) Europäisches Patentamt
European Patent Office
Office européen des brevets

(11) **EP 4 105 253 A1**

(12) **EUROPÄISCHE PATENTANMELDUNG**

(43) Veröffentlichungstag:
21.12.2022 Patentblatt 2022/51

(21) Anmeldenummer: 21179959.8

(22) Anmeldetag: 17.06.2021

(51) Internationale Patentklassifikation (IPC):
*C08G 18/08* (2006.01)    *C08G 18/10* (2006.01)
*C08G 18/32* (2006.01)    *C08G 18/73* (2006.01)
*C08K 3/04* (2006.01)

(52) Gemeinsame Patentklassifikation (CPC):
(C-Sets verfügbar)
**C08G 18/0895; C08G 18/10; C08G 18/3206;
C08G 18/73; C08K 3/04; C08K 3/041; C08K 9/08**

(Forts.)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG
51373 Leverkusen (DE)**

(72) Erfinder:
• **WANDNER, Derk
51519 Odenthal (DE)**
• **BISCHOFFS, Werner
51143 Köln (DE)**

(74) Vertreter: **Levpat
c/o Covestro AG
Gebäude K12
51365 Leverkusen (DE)**

(54) **THERMOPLASTISCHE FORMMASSE MIT VERBESSERTER THERMISCHER UND ELEKTRISCHER LEITFÄHIGKEIT**

(57)   Die Erfindung betrifft eine thermoplastische Formmasse enthaltend

A) mindestens ein thermoplastisches Polyurethanpolymer erhältlich durch die Umsetzung von mindestens folgenden Aufbaukomponenten:

I) einem oder mehreren aliphatischen Diisocyanaten mit einem Molekulargewicht von 140 g/mol bis 170 g/mol und

II) einem oder mehreren aliphatischen Diolen mit einem Molekulargewicht von 62 g/mol bis 120 g/mol,

wobei die zur Erzeugung des thermoplastischen Polyurethanpolymers eingesetzten Aufbaukomponenten zu mindestens 95 Gew.-% aus einem oder mehreren aliphatischen Diisocyanaten I) und einem oder mehreren aliphatischen Diolen II), bezogen auf die Gesamtmasse der eingesetzten Aufbaukomponenten, bestehen, wobei die einen oder mehreren aliphatischen Diisocyanate I) und die einen oder mehreren aliphatischen Diole II) in einem molaren Verhältnis im Bereich von 1,0 : 0,95 bis 0,95 : 1,0 eingesetzt werden, dadurch gekennzeichnet, dass das Verhältnis $\overline{M}_z/\overline{M}_w$ des thermoplastischen Polyurethanpolymers in einem Bereich von 2,3 bis 6 liegt, wobei $\overline{M}_z$ das Zentrifugenmittel der Molmasse und $\overline{M}_w$ das Massenmittel der Molmasse ist, jeweils bestimmt durch Gelpermeationschromatographie in Hexafluoroisopropanol gegen Polymethylmethacrylat als Standard

B) mindestens einen anorganischen Füllstoff ausgewählt aus der Gruppe bestehend aus Graphiten, Bornitrid, Aluminiumoxid, Alumosilikaten, Zinkoxid, Carbonanotubes, Graphen, Carbonfasern, Aluminiumnitrid und Metallfasern,

sowie die Verwendung der Formmasse zur Herstellung von Formkörpern und die Formkörper selbst.

EP 4 105 253 A1

(52) Gemeinsame Patentklassifikation (CPC): (Forts.)

C-Sets
**C08G 18/10, C08G 18/3206**

**Beschreibung**

Die Erfindung betrifft ein eine thermoplastische Formmasse enthaltend ein thermoplastisches Polyurethan und mindestens einen anorganischen Füllstoff ausgewählt aus der Gruppe bestehend aus Graphiten, Bornitrid, Aluminiumoxid, Alumosilikaten, Zinkoxid, Carbonanotubes, Graphen, Carbonfasern, Aluminiumnitrid und Metallfasern, die Verwendung der Formmasse zur Herstellung von Formkörpern sowie die Formkörper selbst.

Polyurethane und insbesondere thermoplastische Polyurethane werden aufgrund ihrer hervorragenden physikalischen Eigenschaften seit Jahren für die unterschiedlichsten Einsatzzwecke verwendet. In manchen Anwendungsbereichen allerdings werden andere Kunststoffe, wie beispielsweise Polyamid-Kunststoffe, verwendet, weil keine Polyurethane mit geeigneten physikalischen Eigenschaften verfügbar sind oder diese nur schwer bereitgestellt werden können.

Polyurethane, die aus kurzkettigen aliphatischen Diolen und kurzkettigen aliphatischen Isocyanaten sowie Polyisocyanaten aufgebaut sind, weisen vergleichbare oder bessere Eigenschaften zu den Polyamid-Kunststoffen auf, beispielsweise bezüglich der Lackierbarkeit des Kunststoffs.

Für solche Polyurethane sind verschiedene Herstellungsverfahren bekannt.

O. Bayer (Angew. Chem. 1947, 59, 257-288) offenbart die Herstellung von Polyurethanen aus aliphatischen Diisocyanaten und aliphatischen Diolen im Batch-Verfahren, insbesondere ein Polyurethan aus 1,6-Hexamethylendiisocyanat und 1,4-Butandiol (Perlon U, Igamid U), welches als feines, sandiges Pulver aus einer Fällungspolymerisation in Dichlorbenzol erhalten wird.

DE728981 offenbart die Herstellung von Polyurethanen und Polyharnstoffen in einem lösungsmittelhaltigen oder lösungsmittelfreien Batch-Verfahren.

V. V. Korshak (Soviet Plastics 1961, 7, 12-15) offenbart ein Semi-Batch-Laborverfahren zur Herstellung eines Polyurethans aus 1,6-Hexamethylendiisocyanat und 1,4-Butandiol. Hierzu wird 1,6-Hexamethylendiisocyanat tropfenweise in erhitztes 1,4-Butandiol eingetragen, was zu einem spröden Additionsprodukt führt.

Allerdings erweisen sich die vielfältigen Reaktionsmöglichkeiten der Isocyanate als nachteilig für die Herstellung von thermoplastischen Polyurethanen. Durch die Polyadditionsreaktion zwischen Isocyanat- und Hydroxygruppen entstehen erst bei sehr hohen Umsatzgraden Molekulargewichte, die gute mechanische Eigenschaften erwarten lassen. Bei hohen Umsatzgraden steigt aber auch die Neigung zu Nebenreaktionen, wie zum Beispiel der Bildung von Allophanat-, Biuret- oder Isocyanuratgruppen, die Verzweigungspunkte in der Polymerstruktur darstellen und dadurch den thermoplastischen Charakter reduzieren oder im Extremfall sogar Duromere ergeben (G. Oertel, Kunststoff-Handbuch, Bd. 7, 3. Aufl., 1993, S.12ff).

Die thermoplastischen Polyurethane sind können zu Formkörpern für verschiedenartige Anwendungen verarbeitet werden. Die thermoplastische Polyurethane aus dem Stand der Technik weisen je nach angewendeten Herstellungsverfahren unterschiedliche mechanische Eigenschaften auf. Thermoplastische Polyurethane basierend auf kurzkettigen aliphatischen Diolen und kurzkettigen aliphatischen Polyisocyanaten weisen eine im Vergleich zu anderen Thermoplasten eher niedrige Erweichungs- bzw. Schmelztemperatur auf. Das bietet Vorteile bei der Verarbeitung der Formassen zu Formkörpern z.B. im Spritzgussprozess

Allerdings sind für manche Anwendungen die thermische und elektrische Leitfähigkeit der aus diesen thermoplastischen Polyurethanen hergestellten Formkörpern nicht ausreichend. Durch eine verbesserte thermische Leitfähigkeit beispielweise kann die Wärmeableitung verbessert werden, wenn der Formkörper in der Anwendung beispielsweise in der Nähe einer intensiven Lichtquelle oder einer anderen Wärmequelle platziert ist. Eine verbesserte elektrische Leitfähigkeit ist erforderlich, wenn die Formkörper beispielsweise einer unerwünschten elektrostatischen Aufladung ausgesetzt sind. Hinsichtlich mechanischer Daten wie Steifigkeit bestand ebenfalls noch Verbesserungsbedarf.

Es war daher wünschenswert eine thermoplastische Formmasse enthaltend ein thermoplastisches Polyurethan bereitzustellen, die die Herstellung von Formkörpern mit erhöhter elektrischer und thermischer Leitfähigkeit ermöglicht. Weiterhin war es wünschenswert, dass die Formkörper hergestellt aus den thermoplastischen Formmassen ein verbessertes Biegemodul aufweisen

Überraschenderweise hat sich gezeigt, dass eine thermoplastische Formmasse enthaltend

A) mindestens ein thermoplastisches Polyurethanpolymer erhältlich durch die Umsetzung von mindestens folgenden Aufbaukomponenten:

I) einem oder mehreren aliphatischen Diisocyanaten mit einem Molekulargewicht von 140 g/mol bis 170 g/mol und

II) einem oder mehreren aliphatischen Diolen mit einem Molekulargewicht von 62 g/mol bis 120 g/mol,

wobei die zur Erzeugung des thermoplastischen Polyurethanpolymers eingesetzten Aufbaukomponenten zu mindestens 95 Gew.-% aus einem oder mehreren aliphatischen Diisocyanaten I) und einem oder mehreren aliphatischen Diolen II), bezogen auf die Gesamtmasse der eingesetzten Aufbaukomponenten, bestehen, wobei die einen oder mehreren aliphatischen Diisocyanate I) und die einen oder mehreren aliphatischen Diole II) in einem molaren Verhältnis im Bereich von 1,0 : 0,95 bis 0,95 : 1,0 eingesetzt werden, dadurch gekennzeichnet, dass das Verhältnis $\overline{M}_z/\overline{M}_w$ des thermoplastischen Polyurethanpolymers in einem Bereich von 2,3 bis 6 liegt, wobei $\overline{M}_z$ das Zentrifugenmittel der Molmasse und $\overline{M}_w$ das Massenmittel der Molmasse ist, jeweils bestimmt durch Gelpermeationschromatographie in Hexafluoroisopropanol gegen Polymethylmethacrylat als Standard

B) mindestens einen anorganischen Füllstoff ausgewählt aus der Gruppe bestehend aus Graphiten, Graphen, Carbonanotubes, Carbonfasern, Metallfasern, Bornitrid, Aluminiumnitrid, Alumosilikaten, Zinkoxid und Aluminiumoxid die gewünschten Eigenschaften aufweist.

Optional enthält die Formmasse neben den Komponenten A und B Polymeradditive und/oder weitere polymere Komponenten als Komponente C.

Die Formmasse enthält bevorzugt 24 bis 98 Gew.-% der Komponente A, 1 bis 75 Gew.-% der Komponente B und 0 bis 30 Gew.-% der Komponente C, weiter bevorzugt 34 bis 96 Gew.-% der Komponenten A, 2 bis 65 Gew.-% der Komponente B und 0,1 bis 25 Gew.-% der Komponente C, besonders bevorzugt weiter bevorzugt 39 bis 94 Gew.-% der Komponente A, 5 bis 60 Gew.-% der Komponente B und 0,2 bis 20 Gew.-% der Komponente C.

In einer bevorzugten Ausführungsform bestehend die Zusammensetzungen zu 80 Gew.-%, weiter bevorzugt zu 90 Gew.-%, besonders bevorzugt zu 95 Gew.-% und am meisten bevorzugt zu 100 Gew.-% aus den Komponenten A, B und C.

Eine weitere Aufgabe der Erfindung war es, Formkörper enthaltend die thermoplastische Formmasse bereitzustellen.

## Komponente A

Bei der Komponente A handelt es sich um ein thermoplastisches Polyurethan erhältlich durch die Umsetzung von mindestens folgenden Aufbaukomponenten:

I) einem oder mehreren aliphatischen Diisocyanaten mit einem Molekulargewicht von 140 g/mol bis 170 g/mol und

II) einem oder mehreren aliphatischen Diolen mit einem Molekulargewicht von 62 g/mol bis 120 g/mol,

wobei die zur Erzeugung des thermoplastischen Polyurethans eingesetzten Aufbaukomponenten zu mindestens 95 Gew.-% aus einem oder mehreren aliphatischen Diisocyanaten I) und einem oder mehreren aliphatischen Diolen II), bezogen auf die Gesamtmasse der eingesetzten Aufbaukomponenten, bestehen, wobei die einen oder mehreren aliphatischen Diisocyanate I) und die einen oder mehreren aliphatischen Diole II) in einem molaren Verhältnis im Bereich von 1,0 : 0,95 bis 0,95 : 1,0 eingesetzt werden, dadurch gekennzeichnet, dass das Verhältnis $\overline{M}_z/\overline{M}_w$ des thermoplastischen Polyurethanpolymers in einem Bereich von 2,3 bis 6, bevorzugt im Bereich von 2,5 bis 5,5, besonders bevorzugt im Bereich von 2,5 bis 5, liegt, wobei $\overline{M}_z$ das Zentrifugenmittel der Molmasse und $\overline{M}_w$ das Massenmittel der Molmasse ist, jeweils bestimmt durch Gelpermeationschromatographie in Hexafluoroisopropanol gegen Polymethylmethacrylat als Standard.

Die in den erfindungsgemäßen Formmassen eingesetzten thermoplastischen Polyurethane können geringe duroplastische Anteile, wie sie beispielsweise durch Allophanatstrukturelemente, Biuretstrukturelemente oder durch die anteilige Verwendung von Triolen bzw. Triisocyanaten als Monomere entstehen, in der Polymermatrix enthalten, aber nur so viel, dass die thermoplastischen Eigenschaften der erfindungsgemäßen Polyurethane erhalten bleiben. Typischerweise sind dies 0,05-5 Gew.-%, vorzugsweise 0,1-4 Gew.-%, besonders bevorzugt 0,3-3 Gew.-%, noch bevorzugter 0,5-2 Gew.-% und ganz besonders bevorzugt 0,5-1 Gew.-% duroplastische Anteile, bezogen auf das Gesamtgewicht des erfindungsgemäßen thermoplastischen Polymers.

Falls nicht explizit anders angegeben beziehen sich alle Prozentangaben auf das Gewicht (Gew.-%). Die Angabe Gew.-% bezieht sich dabei auf das Gesamtgewicht des jeweiligen Systems oder das Gesamtgewicht der jeweiligen Komponente. Zum Beispiel kann ein Copolymer ein bestimmtes Monomer in Gew.-% angegeben enthalten, in diesem Fall würden sich die Gewichtsprozente auf das Gesamtgewicht des Copolymers beziehen.

Das Wort "ein" im Zusammenhang mit zählbaren Größen ist im Rahmen der vorliegenden Erfindung nur dann als Zahlwort zu verstehen, wenn dies ausdrücklich gesagt wird (z. B. durch den Ausdruck "genau ein"). Wenn im Folgenden beispielsweise von "einem Polyol" gesprochen wird, ist das Wort "ein" lediglich als unbestimmter Artikel und nicht als Zahlwort aufzufassen, es ist also damit auch eine Ausführungsform umfasst, die ein Gemisch aus mindestens zwei Polyolen enthält.

Unter "aliphatisch" oder "aliphatischer Rest" werden im Sinne der Erfindung acyclische gesättigte Kohlenwasserstoffreste verstanden, die verzweigt oder linear sowie vorzugsweise unsubstituiert sind. Diese aliphatischen Kohlenwasserstoffreste enthalten vorzugsweise 2, 3, 4, 5 oder 6 Kohlenstoffatome. Das erfindungsgemäße aliphatische Polyurethan ist aus Polyolen und Polyisocyanaten mit jeweils acyclischen, gesättigten Kohlenwasserstoffgrundkörpern aufgebaut, wie beispielsweise 1,6-Diisocyanatohexan (HDI) und 1,4-Butandiol (BDO).

Das erfindungsgemäße thermoplastische aliphatische Polyurethan besteht vorzugsweise im Wesentlichen aus unverzweigten, linearen, besonders bevorzugt im Wesentlichen aus unverzweigten, linearen, unsubstituierten, Polymerketten, wobei die Polymerketten keine cycloaliphatischen Gruppen enthalten. "Im Wesentlichen" bedeutet in diesem Zusammenhang, dass mindestens 95 Mol-%, vorzugsweise mindestens 98 Mol-%, besonders bevorzugt mindestens 99 Mol-% und noch bevorzugter mindestens 99,5 Mol-% der Polymerketten des thermoplastischen aliphatischen Polyurethans aus unverzweigten, linearen ,vorzugsweise unverzweigten, linearen, unsubstituierten, Polymerketten besteht, wobei die Polymerketten keine cycloaliphatischen Gruppen enthalten.

Bevorzugt bedeuten erfindungsgemäß die Ausdrücke "umfassend" oder "enthaltend", "im Wesentlichen bestehend aus" und besonders bevorzugt "bestehend aus".

Falls nicht explizit anders angegeben, werden in der vorliegende Erfindung das Zentrifugenmittel der Molmasse $\overline{M}_z$, das Massenmittel der Molmasse $\overline{M}_w$ und $x_{90}$ mittels Gelpermeationschromatographie (GPC) unter Verwendung von Polymethylmethacrylat als Standard bestimmt. Die zu vermessende Probe wird in einer Lösung von 3 g Kaliumtrifluoracetat in 400 Kubikzentimeter Hexafluorisopropanol aufgelöst (Probenkonzentration ca. 2 mg/Kubikzentimeter), dann mit einer Flussrate von 1 Kubikzentimeter/Minute über eine Vorsäule gegeben und anschließend über drei in Reihe geschaltete Chromatographiesäulen getrennt, zuerst über eine 1000 Å PSS PFG 7 $\mu$m Chromatographiesäule, dann über eine 300 Å PSS PFG 7 $\mu$m Chromatographiesäule und zuletzt über eine 100 Å PSS PFG 7 $\mu$m Chromatographiesäule. Als Detektor wurde ein Brechungsindex-Detektor (RI-Detektor) verwendet.

Das Zentrifugenmittel der Molmasse ($\overline{M}_z$) wurde aus den durch die Messung der Gelpermeationschromatographie erhaltenen Daten mit Hilfe der folgenden Gleichung errechnet:

$$\overline{M}_z = \frac{\sum_i n_i \, M_i{}^3}{\sum_i n_i \, M_i{}^2} \ \text{ in g/mol}$$

wobei:

$M_i$ die molare Masse der Polymere der Fraktion $i$ ist, so dass $M_i < M_{i+1}$ für alle $i$, in g/mol ist,
$n_i$ die Stoffmenge des Polymers der Fraktion $i$, in mol ist.

Das Massenmittel der Molmasse ($\overline{M}_w$) wurde ebenfalls aus den durch die Messung der Gelpermeationschromatographie erhaltenen Daten mit Hilfe der folgenden Gleichung errechnet:

$$\overline{M}_w = \frac{\sum_i n_i \, M_i{}^2}{\sum_i n_i \, M_i} \ \text{ in g/mol}$$

wobei:

$M_i$ die molare Masse der Polymere der Fraktion $i$ ist, so dass $M_i < M_{i+1}$ für alle $i$, in g/mol ist,
$n_i$ die Stoffmenge des Polymers der Fraktion $i$, in mol ist.

In einer bevorzugten Ausführungsform liegt das Verhältnis $\overline{M}_z/\overline{M}_w$ des thermoplastischen Polyurethanpolymers in einem Bereich von 2,5 bis 5,5, vorzugsweise in einem Bereich von 2,5 bis 5.

In einer bevorzugten Ausführungsform wird das thermoplastische Polyurethanpolymer erhalten oder ist erhältlich durch die Umsetzung von einem oder mehreren aliphatischen Diisocyanaten mit einem Molekulargewicht von 140 g/mol bis 170 g/mol und einem oder mehreren aliphatischen Diolen mit einem Molekulargewicht von 62 g/mol bis 120 g/mol und mit mindestens einem Kettenverlängerer, wobei in einem ersten Schritt zumindest ein oder mehrere aliphatische Diisocyanate A) mit einem Molekulargewicht von 140 g/mol bis 170 g/mol mit ein oder mehreren aliphatischen Diolen B) mit einem Molekulargewicht von 62 g/mol bis 120 g/mol zu mindestens einem Prepolymer umgesetzt werden, vorzugsweise zu mindestens einem Hydroxy-terminierten Prepolymer, und das im ersten Schritt erhaltende mindestens eine Prepolymer in einem zweiten Schritt mit mindestens einem Kettenverlängerer zum thermoplastischen Polyurethanpolymer umgesetzt wird, wobei die zur Erzeugung des thermoplastischen Polyurethanpolymers eingesetzten Aufbaukomponenten zu mindestens 95 Gew.-% aus einem oder mehreren aliphatischen Diisocyanaten A) und einem oder mehreren aliphatischen Diolen B), bezogen auf die Gesamtmasse der eingesetzten Aufbaukomponenten, bestehen, wobei die einen oder mehreren aliphatischen Diisocyanate A) und die einen oder mehreren aliphatischen Diole B) in einem molaren Verhältnis im Bereich von 1,0 : 0,95 bis 0,95 : 1,0 eingesetzt werden, dadurch gekennzeichnet, dass das Verhältnis $\overline{M}_z/\overline{M}_w$ des thermoplastischen Polyurethanpolymers in einem Bereich von 2,3 bis 6 liegt, wobei $\overline{M}_z$ das Zentrifugenmittel der Molmasse und $\overline{M}_w$ das Massenmittel der Molmasse ist, jeweils bestimmt durch Gelpermeationschromatographie in Hexafluoroisopropanol gegen Polymethylmethacrylat als Standard.

In einer bevorzugten Ausführungsform erfolgt die Umsetzung in einem Schleifenreaktor (Loop-Reactor).

In einer weiteren bevorzugten Ausführungsform wird das thermoplastische Polyurethanpolymer erhalten oder ist erhältlich durch die Umsetzung von einem oder mehreren aliphatischen Diisocyanaten A), mit einem Molekulargewicht von 140 g/mol bis 170 g/mol und einem oder mehreren aliphatischen Diolen B), mit einem Molekulargewicht von 62 g/mol bis 120 g/mol, gegebenenfalls in Gegenwart mindestens eines Katalysators und/ oder Hilfs- und Zusatzstoffen, wobei die zur Erzeugung des thermoplastischen Polyurethanpolymers eingesetzten Aufbaukomponenten zu mindestens 95 Gew.-% aus einem oder mehreren aliphatischen Diisocyanaten A), und einem oder mehreren aliphatischen Diolen B), bezogen auf die Gesamtmasse der eingesetzten Aufbaukomponenten, bestehen, wobei die einen oder mehreren aliphatischen Polyisocyanate und die einen oder mehreren aliphatischen Polyole in einem molaren Verhältnis im Bereich von 1,0 : 0,95 bis 0,95 : 1,0 eingesetzt werden in einem Verfahren umfassend die folgenden Schritte:

a) Mischen eines Diisocyanatstroms (A) und eines Diolstroms (B) in einer ersten Mischungseinrichtung (7), so dass ein Mischungsstrom (C) erhalten wird, wobei die Massenströme des Diisocyanatstroms (A) und des Diolstroms (B) so eingestellt werden, dass der Isocyanat-Index im Mischungsstrom (C) von 55 bis 85 beträgt,

b) Einleiten des Mischungsstroms (C) in einen Kreislaufstrom (D), der in einem Kreislauf geführt wird, wobei die Monomere des Diisocyanatstroms (A) und des Diolstroms (B) im Kreislaufstrom (D) zu OH-funktionellen Prepolymeren weiterreagieren,

c) Abteilen eines Teilstroms vom Kreislaufstrom (D) als Prepolymerstrom (E) und Einleiten desselben in einen Extruder (18),

d) Einleiten eines Isocyanatzuführungsstroms (F) in den Extruder (18) in Extruderarbeitsrichtung stromabwärts der Einleitung des Prepolymerstroms (E), wobei die Einleitung in der Weise erfolgt, dass die im Prepolymerstrom (E) enthaltenen OH-funktionellen Prepolymere und das im Isocyanatzuführungsstrom (F) enthaltene Polyisocyanat in einem Isocyanat-Index von 85 bis 120 zueinander stehen,

e) Umsetzen des Prepolymerstroms (E) mit dem Isocyanatzuführungsstrom (F) in dem Extruder (18) unter Erhalt des thermoplastischen Polyurethans (G) als Extrudat,

dadurch gekennzeichnet, dass das Verhältnis $\overline{M}_z/\overline{M}_w$ des thermoplastischen Polyurethanpolymers in einem Bereich von 2,3 bis 6 liegt, wobei $\overline{M}_z$ das Zentrifugenmittel der Molmasse und $\overline{M}_w$ das Massenmittel der Molmasse ist, jeweils bestimmt durch Gelpermeationschromatographie in Hexafluoroisopropanol gegen Polymethylmethacrylat als Standard.

In einer bevorzugten Ausführungsform liegt der $\overline{M}_z$-Wert des thermoplastischen Polyurethanpolymers in einem Bereich von 80000 g/mol bis 900000 g/mol, vorzugsweise in einem Bereich von 80000 g/mol bis 850000 g/mol, besonders bevorzugt in einem Bereich von 85000 g/mol bis 800000 g/mol und noch bevorzugter in einem Bereich von 85000 g/mol bis 760000 g/mol, bestimmt durch Gelpermeationschromatographie in Hexafluoroisopropanol gegen Polymethylmethacrylat als Standard.

In einer bevorzugten Ausführungsform besteht das thermoplastische Polyurethanpolymer zu mindestens 96 Gew.-%, vorzugsweise zu mindestens 97 Gew.-%, besonders bevorzugt zu mindestens 98 Gew.-%, noch bevorzugter zu mindestens 99 Gew.-%, noch mehr bevorzugter zu mindestens 99,5 Gew.-% und am bevorzugtesten zu mindestens 99,9 Gew.-% aus einem oder mehreren aliphatischen Diisocyanaten I) und einem oder mehreren aliphatischen Diolen II), bezogen auf die Gesamtmasse des Polyurethanpolymers.

Als aliphatische Diisocyanate I) eigenen sich alle dem Fachmann bekannten monomeren aliphatischen Diisocyanate, die ein Molekulargewicht von 140 g/mol bis 170 g/mol aufweisen. Es ist dabei unerheblich, ob die Diisocyanate mittels Phosgenierung oder nach einem phosgenfreien Verfahren erhalten wurden. Die Diisocyanate und / oder dessen Vorläuferverbindungen können aus fossilen oder biologischen Quellen gewonnen worden sein. Vorzugsweise wird 1,6-Diisocyanatohexan (HDI) aus 1,6-Hexamethylendiamin und 1,5-Diisocyanatopentan aus 1,5-Pentamethylendiamin hergestellt, wobei 1,6-Hexamethylendiamin und 1,5-Pentamethylendiamin aus biologischen Quellen, vorzugsweise durch bakterielle Fermentation, gewonnen werden. Bevorzugt sind die aliphatischen Diisocyanate zum Aufbau des erfindungsgemäßen thermoplastischen Polyurethanpolymers ausgewählt aus der Gruppe bestehend aus 1,4-Diisocyanatobutan (BDI), 1,5-Diisocyanatopentan (PDI), 1,6-Diisocyanatohexan (HDI) und 2-Methyl-1,5-diisocyanatopentan oder einer Mischung von mindestens zwei hieraus.

In einer bevorzugten Ausführungsform ist das eine oder sind die mehreren aliphatischen Diisocyanate I) ausgewählt aus der Gruppe bestehend aus 1,4-Diisocyanatobutan, 1,5-Diisocyanatopentan, 1,6-Diisocyanatohexan, 2-Methyl-1,5-diisocyanatopentan und / oder Mischungen aus mindestens zwei hieraus. In einer anderen bevorzugten Aufführungsform werden 1,5-Diisocyanatopentan und / oder 1,6-Diisocyanatohexan als aliphatische Diisocyanate I) eingesetzt. In einer weiteren bevorzugten Aufführungsform wird nur 1,6-Diisocyanatohexan als aliphatisches Diisocyanat I) eingesetzt.

Als aliphatische Diole II) eignen sich alle dem Fachmann bekannten organische Diole die ein Molekulargewicht von 62 g/mol bis 120 g/mol aufweisen. Die Diole und / oder dessen Vorläuferverbindungen können aus fossilen oder biologischen Quellen gewonnen worden sein. Bevorzugt sind die aliphatischen Diole zum Aufbau des erfindungsgemäßen thermoplastischen Polyurethanpolymers ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,2-Pentandiol, 1,3-Pentandiol, 1,4-Pentandiol, 1,5-Pentandiol, 1,2-Hexandiol, 1,3-Hexandiol, 1,4-Hexandiol, 1,5-Hexandiol und 1,6-Hexandiol oder einer Mischung aus mindestens zwei hieraus.

In einer bevorzugten Ausführungsform ist das eine oder sind die mehreren aliphatischen Diole II) ausgewählt sind aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol und / oder Mischungen aus mindestens zwei hieraus. In einer weiteren bevorzugten Aufführungsform werden 1,3-Propandiol, 1,4-Butandiol, 1,6-Hexandiol und / oder Mischungen aus mindestens zwei hieraus als aliphatische Diole II) eingesetzt. In einer weiteren bevorzugten Aufführungsform werden 1,4-Butandiol und / oder 1,6-Hexandiol als aliphatische Diole II) eingesetzt. In einer anderen bevorzugten Aufführungsform wird nur 1,4-Butandiol als aliphatisches Diol eingesetzt.

In einer weiteren bevorzugten Ausführungsform ist das thermoplastische Polyurethanpolymer erhältlich durch die Umsetzung von mindestens folgenden Aufbaukomponenten:

I) einem oder mehreren aliphatischen Diisocyanaten ausgewählt aus der Gruppe bestehend aus 1,4-Diisocyanatobutan, 1,5-Diisocyanatopentan, 1,6-Diisocyanatohexan, 2-Methyl-1,5-diisocyanatopentan und / oder Mischungen aus mindestens zwei hieraus und

II) einem oder mehreren aliphatischen Diolen ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol oder Mischungen aus mindestens zwei hieraus,

wobei die zur Erzeugung des thermoplastischen Polyurethanpolymers eingesetzten Aufbaukomponenten zu mindestens 95 Gew.-%, vorzugsweise zu mindestens 98 Gew.-%, besonders bevorzugt zu mindestens 99 Gew.-%, noch bevorzugter zu 99,5 Gew.-% aus einem oder mehreren aliphatischen Diisocyanaten I) und einem oder mehreren aliphatischen Diolen II), bezogen auf die Gesamtmasse der eingesetzten Aufbaukomponenten, bestehen, wobei die einen oder mehreren aliphatischen Diisocyanate I) und die einen oder mehreren aliphatischen Diole II) in einem molaren Verhältnis im Bereich von 1,0 : 0,95 bis 0,95 : 1,0 eingesetzt werden, dadurch gekennzeichnet, dass das Verhältnis $\overline{M}_z/\overline{M}_w$ des thermoplastischen Polyurethanpolymers in einem Bereich von 2,3 bis 6 liegt, wobei $\overline{M}_z$ das Zentrifugenmittel der Molmasse und $\overline{M}_w$ das Massenmittel der Molmasse ist, jeweils bestimmt durch Gelpermeationschromatographie in Hexafluoroisopropanol gegen Polymethylmethacrylat als Standard.

Als weitere Aufbaukomponenten zur Erzeugung des thermoplastischen Polyurethanpolymers können, neben dem mindestens einem oder den mehreren aliphatischen Diisocyanaten I) und dem einem oder den mehreren aliphatischen Diolen II), auch ein oder mehrere Polyisocyanate III) und / oder ein oder mehrere NCO-reaktive Verbindungen IV) eingesetzt werden. Diese weiteren Aufbaukomponenten III) und/oder IV) sind von den Aufbaukomponenten I) und II) unterschiedlich und können in einer Menge von 0 Gew.-% bis 5 Gew.-% eingesetzt werden. In einer bevorzugten Ausführungsform bestehen die zur Erzeugung des thermoplastischen Polyurethanpolymers eingesetzten Aufbaukomponenten zu 0,1 Gew.-% bis 5 Gew.-% aus einem oder mehreren Polyisocyanaten III) und / oder einer oder mehreren NCO-reaktive Verbindungen IV), bezogen auf die Gesamtmasse der eingesetzten Aufbaukomponenten. Die Isocyanat-Komponenten I) und gegebenenfalls III) werden mit den Isocyanatreaktiven-Komponenten II) und gegebenenfalls IV) in einem molaren Verhältnis von Isocyanat-Komponente : Isocyanatreaktiver-Komponente im Bereich von 1,0 : 0,95 bis 0,95 : 1,0 eingesetzt.

In einer weiteren bevorzugten Ausführungsform ist das thermoplastische Polyurethanpolymer erhältlich durch die Umsetzung von mindestens folgenden Aufbaukomponenten:

I) einem oder mehreren aliphatischen Diisocyanaten mit einem Molekulargewicht von 140 g/mol bis 170 g/mol,
II) einem oder mehreren aliphatischen Diolen mit einem Molekulargewicht von 62 g/mol bis 120 g/mol,

III) einem oder mehreren Polyisocyanaten, und / oder

IV) einer oder mehreren NCO-reaktive Verbindungen,

wobei die zur Erzeugung des thermoplastischen Polyurethanpolymers eingesetzten Aufbaukomponenten zu mindestens 95 Gew.-% aus einem oder mehreren aliphatischen Diisocyanaten I) und einem oder mehreren aliphatischen Diolen II) und zu ≤ 5 Gew.-% aus einem oder mehreren Polyisocyanaten III) und / oder einer oder mehreren NCO-reaktive Verbindungen IV) bestehen, bezogen auf die Gesamtmasse der eingesetzten Aufbaukomponenten.

Als Polyisocyanat III) zum Aufbau des erfindungsgemäßen Polyurethanpolymers eignen sich alle dem Fachmann an sich bekannten aliphatischen, cycloaliphatischen, aromatischen oder araliphatischen Di- und Triisocyanate, wobei es unerheblich ist, ob diese mittels Phosgenierung oder nach phosgenfreien Verfahren erhalten wurden. Die Polyisocyanate und / oder dessen Vorläuferverbindungen können aus fossilen oder biologischen Quellen gewonnen worden sein. Daneben können auch die dem Fachmann an sich gut bekannten höhermolekularen Folgeprodukte (Oligo- und Polyisocyanate sowie NCO-Gruppen aufweisende Prepolymere, insbesondere NCO-Gruppen aufweisende Polyurethanprepolymere) monomerer Di- und/oder Triisocyanate mit Urethan-, Harnstoff-, Carbodiimid-, Acylharnstoff-, Isocyanurat-, Allophanat-, Biuret-, Oxadiazintrion-, Uretdion-, Iminooxadiazindionstruktur jeweils einzeln oder in beliebigen Mischungen untereinander eingesetzt werden. Bevorzugt als Polyisocyanat III) sind monomere Diisocyanate die ein Molekulargewicht von ≥ 140 bis ≤ 400 g/mol aufweisen.

Beispiele für geeignete aliphatische Diisocyanate sind 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan und 1,10-Diisocyanatodecan.

Beispiele für geeignete cycloaliphatische Diisocyanate sind 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI), 1-Isocyanato-1-methyl-4(3)-isocyanatomethylcyclohexan, 2,4'- und 4,4'-Diisocyanatodicyclohexylmethan (H12MDI), 1,3- und 1,4-Bis(isocyanatomethyl)cyclohexan, Bis-(isocyanatomethyl)-norbornan (NBDI), 4,4'-Diisocyanato-3,3'-dimethyldicyclohexylmethan, 4,4'-Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanato-adamantan und 1,3-Dimethyl-5,7-diisocyanatoadamantan.

Beispiele für geeignete aromatische Diisocyanate sind 2,4- und 2,6-Diisocyanatotoluol (TDI), 2,4'- und 4,4'-Diisocyanatodiphenylmethan (MDI) und 1,5-Diisocyanatonaphthalin.

Beispiele für geeignete araliphatische Diisocyanate sind 1,3- und 1,4-Bis-(isocyanatomethyl)benzol (Xylylendiisocyanat; XDI), 1,3- und 1,4-Bis(1-isocyanato-1-methylethyl)-benzol (TMXDI).

Beispiele für geeignete Triisocyanate sind Triphenylmethan-4,4',4"-triisocyanat oder 4-Isocyanatomethyl-1,8-octandiisocyanat (TIN).

Weitere ebenfalls geeignete Diisocyanate finden sich darüber hinaus beispielsweise in HOUBEN-WEYL "Methoden der organischen Chemie", Band E20 "Makromolekulare Stoffe", Georg Thieme Verlag, Stuttgart, New York 1987, S. 1587-1593 oder in Justus Liebigs Annalen der Chemie Band 562 (1949) S. 75 - 136.

Als NCO-reaktive Verbindung IV) zum Aufbau des erfindungsgemäßen Polyurethanpolymers eignen sich alle dem Fachmann an sich bekannten organischen Verbindungen, die wenigstens zwei isocyanatreaktive (NCO-reaktive) Gruppen aufweisen (NCO-reaktive Verbindung bzw. isocyanatreaktive Verbindung). Im Rahmen der vorliegenden Erfindung werden als NCO-reaktive Gruppen insbesondere Hydroxy-, Amino- oder Thiogruppen angesehen. In Sinne der Erfindung kann auch ein Gemisch aus verschiedenen NCO-reaktiven Verbindungen zum Aufbau des mindestens eines weiteren Strukturelementes (S) verwendet werden.

Als NCO-reaktive Verbindung IV) können alle Systeme eingesetzt werden, die im Mittel wenigstens 1,5, bevorzugt 2 bis 3 und noch bevorzugter 2 NCO-reaktive Gruppen aufweisen.

Geeignete isocyanatreaktive Verbindungen sind beispielsweise aliphatische, araliphatische oder cycloaliphatische Diole, organische Triole, Polyester-, Polyether-, Polycarbonat-, Poly(meth)acrylat-, Polyurethanpolyole und Polyamine.

Beispiele für aliphatische, araliphatische oder cycloaliphatische Diole sind 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, 1,7-Heptandiol, 1,8-Octandiol, 1,9-Nonandiol, 1,10-Decandiol, 1,11-Undecandiol, 1,12-Dodecandiol, 1,3-Cyclobutandiol, 1,3-Cyclopentandiol, 1,2-, 1,3- und 1,4-Cyclohexandiol, 1,4-Cyclohexandimethanol, 2-Cyclohexen-1,4-diol, 2-Methyl-1,4-cyclohexandiol, 2-Ethyl-1,4-cyclohexandiol, 2,2,4,4-Tetramethyl-1,3-cyclobutandiol, hydriertes Bisphenol A (2,2-Bis(4-hydroxycyclohexyl)propan), 1,3-Cycloheptandiol, 1,4-Cycloheptandiol, 2-Methyl-1,4-cycloheptandiol, 4-Methyl-1,3-cycloheptandiol, 4,4'-(1-Methylethyliden)-biscyclohexanol, 1,3-Cyclooctandiol, 1,4-Cyclooctandiol, 1,5-Cyclooctandiol, 5-Methyl-1,4-cyclooctandiol, 5-Ethyl-1,4-cyclooctandiol, 5-Propyl-1,4-cyclooctandiol, 5-Butyl-1,4-cyclooctandiol und 1,2-Benzoldimethanol.

Beispiele für organische Triole sind Glycerin und Trimethylolpropan.

Vorzugsweise werden aliphatische, araliphatische oder cycloaliphatische Diole mit Molekulargewichten von 62 g/mol bis 250 g/mol eingesetzt.

Geeignete Polyesterpolyole können in bekannter Weise durch Polykondensation von niedermolekularen Polycarbonsäurederivaten, wie beispielsweise Bernsteinsäure, Adipinsäure, Korksäure, Azelainsäure, Sebacinsäure, Dodekandisäure, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, Dimerfettsäure, Trimerfettsäure, Phthalsäure, Phthalsäureanhydrid, Isophthalsäure, Terephthalsäure, Zitronensäure oder Trimellithsäure, mit niedermolekularen Polyolen, wie beispielsweise Ethylenglykol, Diethylenglykol, Neopentylglykol, Hexandiol, Butandiol, 1,4-Dihydroxycyclohexan, 1,4-Dimethylolcyclohexan, Propylenglykol, Glycerin, Trimethylolpropan, 1,4-Hydroxymethylcyclohexan, 2-Methyl-1,3-propandiol, Butantriol-1,2,4, Triethylenglykol, Tetraethylenglykol, Polyethylenglykol, Dipropylenglykol, Polypropylenglykol, Dibutylenglykol und Polybutylenglykol, oder durch Ringöffnende Polymerisation cyclischer Carbonsäureester, wie ε-Caprolacton, hergestellt werden. Darüber hinaus lassen sich auch Hydroxycarbonsäurederivate, wie beispielsweise Milchsäure, Zimtsäure oder ω-Hydroxycapronsäure zu Polyesterpolyolen polykondensieren. Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigten Fettsäureenthaltenden Fettgemisches mit einem oder mehreren Alkoholen mit 1 bis 12 C-Atomen und durch anschließende partielle Umesterung der Triglycerid-Derivate zu Alkylesterpolyolen mit 1 bis 12 C-Atomen im Alkylrest hergestellt werden.

Geeignete Polyetherpolyole sind in an sich bekannter Weise durch Alkoxylierung von geeigneten Starter-Molekülen unter Basenkatalyse oder Einsatz von Doppelmetallcyanidverbindungen (DMC-Verbindungen) zugänglich. Die Polyetherpolyole sind gegebenenfalls blockweise aufgebaute Polyadditionsprodukte cyclischer Ether an OH- oder NH-funktionelle Startermoleküle. Geeignete cyclische Ether sind beispielsweise Styroloxide, Ethylenoxid, Propylenoxid, Tetrahydrofuran, Butylenoxid, Epichlorhydrin, sowie deren beliebige Mischungen. Als Startermoleküle können die oben im Rahmen der Diskussion der Polyesterpolyole genannten mehrwertigen Alkohole einer OH-Funktionalität ≥ 2 sowie primäre oder sekundäre Amine und Aminoalkohole verwendet werden. Geeignete und bevorzugte Polyetherpolyole sind Di-, Tri-, Tetraethylenglykol, und Di-, Tri-, Tetrapropylenglykol.

Geeignete Polycarbonatpolyole sind in an sich bekannter Weise durch Umsetzung von organischen Carbonaten oder Phosgen mit Diolen oder Diol-Mischungen zugänglich. Hierfür geeignete organische Carbonate sind beispielsweise Dimethyl-, Diethyl- und Diphenylcarbonat. Geeignete mehrwertige Alkohole umfassen die oben im Rahmen der Diskussion der Polyesterpolyole genannten mehrwertigen Alkoholen einer OH-Funktionalität ≥ 2. Bevorzugt können 1,4-Butandiol, 1,6-Hexandiol und / oder 3-Methylpentandiol eingesetzt werden. Polyesterpolyole können auch zu Polycarbonatpolyolen umgearbeitet werden. Besonders bevorzugt werden bei der Umsetzung der genannten Alkohole zu Polycarbonatpolyolen Dimethyl- oder Diethylcarbonat eingesetzt.

Geeignete Polyacrylatpolyole sind in der Regel Copolymerisate und weisen vorzugsweise massenmittlere Molekulargewichte Mw zwischen 1.000 und 10.000 Dalton auf. Die Herstellung geeigneter Polyacrylatpolyole ist dem Fachmann bekannt. Sie werden durch radikalische Polymerisation von Hydroxylgruppen aufweisenden, olefinisch ungesättigten Monomeren oder durch radikalische Copolymerisation von Hydroxylgruppen aufweisenden, olefinisch ungesättigten Monomeren mit gegebenenfalls anderen olefinisch ungesättigten Monomeren, wie z.B. Ethylacrylat, Ethylmethacrylat, Propylacrylat, Propylmethacrylat, Isopropylacrylat, Isopropylmethacrylat, Butylacrylat, Butylmethacrylat, Isobutylacrylat, Isobutylmethacrylat, tert-Butylacrylat, tert-Butylmethacrylat, Amylacrylat, Amylmethacrylat, Hexylacrylat, Hexylmethacrylat, Ethylhexylacrylat, Ethylhexylmethacrylat, 3,3,5-Trimethyl-hexylacrylat, 3,3,5-Trimethylhexylmethacrylat, Stearylacrylat, Stearylmethacrylat, Laurylacrylat oder Laurylmethacrylat, Cycloalkylacrylate und/oder Cycloalkylmethacrylate, wie Cyclo-pentylacrylat, Cyclopentylmethacrylat, Isobornylacrylat, Isobornylmethacrylat oder insbesondere Cyclohexylacrylat und/oder Cyclohexylmethacrylat. erhalten. Geeignete Hydroxylgruppen aufweisende, olefinisch ungesättigte Monomere sind insbesondere 2-Hydroxyethylacrylat, 2-Hydroxyethylmethacrylat, 2-Hydroxypropylacrylat, 2-Hydroxypropylmethacrylat, 3-Hydroxypropylacrylat, 3-Hydroxypropylmethacrylat, 3-Hydroxybutylacrylat, 3-Hydroxybutylmethacrylat sowie insbesondere 4-Hydroxybutylacrylat und/oder 4-Hydroxybutylmethacrylat. Als weitere Monomerbausteine für die Polyacrylatpolyole können vinylaromatische Kohlenwasserstoffe, wie Vinyltoluol, alpha-Methylstyrol oder insbesondere Styrol, Amide oder Nitrile der Acryl- oder Methacrylsäure, Vinylester oder Vinylether, sowie in untergeordneten Mengen insbesondere Acryl- und/oder Methacrylsäure eingesetzt werden.

Geeignete Polyurethanpolyole sind beispielsweise Hydroxy-terminierte Prepolymere, die aus den oben beschrieben Diisocyanaten und Diolen aufgebaut sind. Neben Urethangruppen können die Polyurethanpolyole auch Harnstoff-, Carbodiimid-, Acylharnstoff-, Isocyanurat-, Allophanat-, Biuret-, Oxadiazintrion-, Uretdion-, Iminooxadiazindionstrukturen enthalten. Herstellbar sind die Polyurethanpolyole durch Umsetzung von Diisocyanate mit von Diolen nach dem Fachmann bekannten Herstellungsverfahren.

Beispiele für Polyamine sind Ethylendiamin, 1,2-Diaminopropan, 1,4-Diaminobutan, 2-Methylpentamethylendiamin, 1,6-Diaminohexan, 2,2,4- bzw. 2,4,4-Trimethylhexamethylendiamin, 1,2-Diaminocyclohexan, 1-Amino-3,3,5-trimethyl-5-aminomethylcyclohexan (Isophorondiamin, IPDA), 4,4'-Diaminodicyclohexyl-methan, Polyasparaginsäureesterester, wie sie beispielsweise nach dem Verfahren der EP-B 0 403 921 durch Umsetzung von Diaminen mit Fumarsäure- bzw. Maleinsäureestern erhältlich sind oder auch Polyetherpolyamine mit aliphatisch gebundenen primären Aminogruppen.

Die Umsetzung der Aufbaukomponenten I), II), gegebenenfalls III) und / oder gegebenenfalls IV) zur Erzeugung des erfindungsgemäßen Polyurethanpolymers kann in Gegenwart von einem oder mehreren Katalysatoren stattfinden.

Geeignete Katalysatoren sind die nach dem Stand der Technik bekannten und üblichen tertiären Amine, wie z. B. Triethylamin, Dimethylcyclohexylamin, N-Methylmorpholin, N,N'-Dimethyl-piperazin, 2-(Dimethylaminoethoxy)-ethanol, Diazabicyclo-(2,2,2)-octan und ähnliche, sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugte Katalysatoren sind organische Metallverbindungen, insbesondere Titansäureester, Eisen- und / oder Zinnverbindungen.

Der Katalysator wird in Mengen von 0,001 bis 2,0 Gew.-%, bevorzugt von 0,005 bis 1,0 Gew.-% besonders bevorzugt von 0,01 bis 0,1 Gew.-% bezogen auf die Diisocyanatkomponente eingesetzt. Der Katalysator kann in Substanz eingesetzt werden oder gelöst in der Diol-Komponente. Ein Vorteil ist hierbei, dass die dann erhaltenen thermoplastischen Polyurethane keine Verunreinigungen durch gegebenenfalls mitverwendete Lösungsmittel für den Katalysator enthalten. Die Zugabe des Katalysators kann dabei in einer oder mehreren Portionen oder auch kontinuierlich, z. B. mit Hilfe einer geeigneten Dosierpumpe, über die gesamte Dauer der Umsetzung erfolgen.

Alternativ können aber auch Mischungen des bzw. der Katalysatoren mit einem Katalysatorlösungsmittel, bevorzugt mit einem organischen Katalysatorlösungsmittel, eingesetzt werden. Der Verdünnungsgrad der Katalysatorlösungen kann dabei innerhalb eines sehr breiten Bereichs frei gewählt werden. Katalytisch wirksam sind Lösungen ab einer Konzentration von 0,001 Gew.-%.

Geeignete Lösungsmittel für den Katalysator sind beispielsweise gegenüber Isocyanatgruppen inerte Lösungsmittel wie z.B. Hexan, Toluol, Xylol, Chlorbenzol, Essigsäureethylester, Essigsäurebutylester, Diethylenglykoldimethylether, Dipropylenglykoldimethylether, Ethylenglykolmonomethyl- oder -ethyletheracetat, Diethylenglykolethyl- und -butyletheracetat, Propylenglykolmonomethyl-etheracetat, 1-Methoxypropyl-2-acetat, 3- Methoxy-n-butylacetat, Propylenglykoldiacetat, Aceton, Methylethylketon, Methylisobutylketon, Cyclohexanon, Lactone, wie β-Propiolacton, γ-Butyrolacton, ε-Caprolacton und ε-Methylcaprolacton, aber auch Lösungsmittel wie N-Methylpyrrolidon und N-Methylcaprolactam, 1,2-Propylencarbonat, Methylenchlorid, Dimethylsulfoxid, Triethylphosphat oder beliebige Gemische derartiger Lösungsmittel.

Es können aber auch Lösungsmittel für den Katalysator zum Einsatz kommen, die gegenüber Isocyanaten reaktive Gruppen tragen und in das Diisocyanat eingebaut werden können. Beispiele für solche Lösungsmittel sind ein- oder mehrwertige einfache Alkohole, wie z. B. Methanol, Ethanol, n-Propanol, Isopropanol, n-Butanol, n-Hexanol, 2-Ethyl-1-hexanol, Ethylenglykol, Propylenglykol, die isomeren Butandiole, 2-Ethyl-1,3-hexandiol oder Glycerin; Etheralkohole, wie z. B. 1-Methoxy-2-propanol, 3-Ethyl-3-hydroxymethyloxetan, Tetrahydrofurfurylalkohol, Ethylengylkolmonomethylether, Ethylenglykolmonoethylether, Ethylenglykolmonobutylether, Diethylenglykolmonomethylether, Diethylenglykolmonothylether, Diethylenglykolmonobutylether, Diethylenglykol, Dipropylenglykol oder auch flüssige höhermolekulare Polyethylenglykole, Polypropylenglykole, gemischte Polyethylen/polypropylenglykole sowie deren Monoalkylether; Esteralkohole, wie z. B. Ethylenglykolmonoacetat, Propylenglykolmonolaurat, Glycerinmono- und diacetat, Glycerinmonobutyrat oder 2,2,4-Trimethyl-1,3-pentandiol-monoisobutyrat; ungesättigte Alkohole wie z. B. Allylalkohol, 1,1-Dimethyl-allylalkohol oder Oleinalkohol; araliphatische Alkohole wie z. B. Benzylalkohol; N-monosubstituierte Amide, wie z. B. N-Methylformamid, N-Methylacetamid, Cyanacetamid oder 2-Pyrrolidinon oder beliebige Gemische derartiger Lösungsmittel.

In einer weiteren bevorzugten Ausführungsform ist das erfindungsgemäße thermoplastische Polyurethanpolymer erhältlich durch die Umsetzung von mindestens folgenden Aufbaukomponenten:

I) einem oder mehreren aliphatischen Diisocyanaten ausgewählt aus der Gruppe bestehend aus 1,4-Diisocyanatobutan, 1,5-Diisocyanatopentan, 1,6-Diisocyanatohexan, 2-Methyl-1,5-diisocyanatopentan und / oder Mischungen aus mindestens zwei hieraus,

II) einem oder mehreren aliphatischen Diolen ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol oder Mischungen aus mindestens zwei hieraus,

III) einem oder mehreren monomeren Diisocyanaten mit einem Molekulargewicht von 140 g/mol bis 400 g/mol,

IV) einem oder mehreren NCO-reaktiven Verbindungen ausgewählt aus der Gruppe bestehend aus aliphatischen Diolen, araliphatischen Diolen, cycloaliphatischen Diolen, organischen Triolen, Polyesterpolyolen, Polyetherpolyolen, Polycarbonatpolyolen, Poly(meth)acrylatpolyolen, Polyurethanpolyolen, Polyaminen und / oder Mischungen aus mindestens zwei hieraus,

wobei die zur Erzeugung des thermoplastischen Polyurethanpolymers eingesetzten Aufbaukomponenten zu 95 Gew.-% bis 99,9 Gew.-% aus einem oder mehreren aliphatischen Diisocyanaten I) und einem oder mehreren aliphatischen Diolen II) und zu 0,1 Gew.-% bis 5 Gew.-% aus einem oder mehreren Diisocyanaten III) und / oder einer oder mehreren NCO-reaktive Verbindungen IV), bezogen auf die Gesamtmasse der eingesetzten Aufbaukomponenten, bestehen, wobei die Diisocyanat-Komponenten I) und gegebenenfalls III) mit den NCO-reaktiven-Komponenten II) und gegebenenfalls IV) in einem molaren Verhältnis von Diisocyanat-Komponente : NCO-reaktiver-Komponente im Bereich von 1,0 : 0,95 bis 0,95 : 1,0 eingesetzt werden, dadurch gekennzeichnet, dass das Verhältnis $\overline{M}_z/\overline{M}_w$ des thermoplastischen Polyurethanpolymers in einem Bereich von 2,3 bis 6 liegt, wobei $\overline{M}_z$ das Zentrifugenmittel der Molmasse und $\overline{M}_w$ das Massenmittel der Molmasse ist, jeweils bestimmt durch Gelpermeationschromatographie in Hexafluoroisopropanol gegen Polymethylmethacrylat als Standard.

In einer weiteren bevorzugten Ausführungsform ist das erfindungsgemäße thermoplastische Polyurethanpolymer erhältlich durch die Umsetzung von mindestens folgenden Aufbaukomponenten:

I) 1,6-Diisocyanatohexan und
II) 1,4-Butandiol,
III) einem oder mehreren monomeren Diisocyanaten mit einem Molekulargewicht von 140 g/mol bis 400 g/mol,
IV) einem oder mehreren NCO-reaktiven Verbindungen ausgewählt aus der Gruppe bestehend aus aliphatischen, araliphatischen oder cycloaliphatischen Diolen mit Molekulargewichten von 62 g/mol bis 250 g/mol und / oder Mischungen aus mindestens zwei hieraus,

wobei die zur Erzeugung des thermoplastischen Polyurethanpolymers eingesetzten Aufbaukomponenten zu 95 Gew.-% bis 99,9 Gew.-% aus 1,6-Diisocyanatohexan I) und 1,4-Butandiol II) und zu 0,1 Gew.-% bis 5 Gew.-% aus einem oder mehreren Diisocyanaten III) und / oder einer oder mehreren NCO-reaktive Verbindungen IV), bezogen auf die Gesamtmasse der eingesetzten Aufbaukomponenten, bestehen, wobei die Diisocyanat-Komponenten I) und gegebenenfalls III) mit den NCO-reaktiven-Komponenten II) und gegebenenfalls IV) in einem molaren Verhältnis von Diisocyanat-Komponente : NCO-reaktiver-Komponente im Bereich von 1,0 : 0,95 bis 0,95 : 1,0 eingesetzt werden, dadurch gekennzeichnet, dass das Verhältnis $\overline{M}_z/\overline{M}_w$ des thermoplastischen Polyurethanpolymers in einem Bereich von 2,3 bis 6 liegt, wobei $\overline{M}_z$ das Zentrifugenmittel der Molmasse und $\overline{M}_w$ das Massenmittel der Molmasse ist, jeweils bestimmt durch Gelpermeationschromatographie in Hexafluoroisopropanol gegen Polymethylmethacrylat als Standard.

In einer bevorzugten Ausführungsform weist das erfindungsgemäße thermoplastische Polyurethanpolymer einen Urethangruppengehalt von 40 Gew.-% bis 60 Gew.-%, vorzugsweise von 40 Gew.-% bis 52 Gew.-% auf, bezogen auf das Gesamtgewicht des thermoplastischen Polyurethanpolymers auf. In einer besonders bevorzugten Ausführungsform weist das erfindungsgemäße thermoplastische Polyurethanpolymer einen Urethangruppengehalt von 44 Gew.-% bis 48 Gew.-%, noch bevorzugter von 44 Gew.-% bis 46 Gew.-% auf, bezogen auf das Gesamtgewicht des thermoplastischen Polyurethanpolymers auf.

Der Urethangruppengehalt wird bestimmt indem die Masse der (theoretischen) linearen Repetiereinheit wird durch die Masse der Urethanstruktureinheit geteilt wird. Hierbei wird jede Isocyanatgruppe (-NCO) mit einer Alkoholgruppe (-OH) umgesetzt. Der resultierende Wert wird mit 100 multipliziert um einen Wert in % zu erhalten.

Beispielberechnung:

|  |  | Masse in g/mol |
|---|---|---|
| Diisocyanat | 1,5-Pentamethylendiisocyanat | 154,17 |
| Diol | 1,4-Butandiol | 90,12 |
| Repetiereinheit |  | 244,29 |
| Urethangruppe |  | 59,02 |

Anzahl der theoretisch vorhandenen Urethangruppen = 2

Resultierende Urethangruppendichte = 48,32

In einer bevorzugten Ausführungsform weist das erfindungsgemäße thermoplastische Polyurethanpolymer ein mittels Elementaranalyse bestimmtes Gewichtsprozent-Verhältnis von O zu N von $\geq$ 1,5:1 bis $\leq$ 2,6:1 und ein mittels Elementaranalyse bestimmtes Gewichtsverhältnis N zu C von $\geq$ 1:10 bis $\leq$ 1:3 auf.

In einer weiteren bevorzugten Ausführungsform ist das erfindungsgemäße thermoplastische Polyurethanpolymer ein semikristallines thermoplastisches Polyurethanpolymer.

In einer weiteren bevorzugten Ausführungsform weist das erfindungsgemäße thermoplastische Polyurethanpolymer einen Glasübergangspunkt von < 50 °C, vorzugsweise im Bereich zwischen ≥ 0° C und < 50 °C auf, bestimmt mittels Differential Scanning Calorimetry gemäß DIN EN 61006 (November 2004) .

In einer weiteren bevorzugten Ausführungsform weist das erfindungsgemäße thermoplastische Polyurethanpolymer einen Schmelzpunkt von > 140 °C, weiter bevorzugt zwischen 150 °C und 200°C auf, bestimmt mittels Differential Scanning Calorimetry gemäß DIN EN 61006 (November 2004).

In einer weiteren bevorzugten Ausführungsform liegen bei dem erfindungsgemäßen thermoplastischen Polyurethanpolymer zwischen dem Glasübergangspunkt, bestimmt mittels Differential Scanning Calorimetry gemäß DIN EN 61006 (November 2004), und dem Schmelzpunkt, bestimmt mittels Differential Scanning Calorimetry gemäß DIN EN 61006 (November 2004), des thermoplastischen Polyurethans mindestens 100 °C.

Die Herstellung des thermoplastischen Polyurethanpolymers kann beispielsweise in einem mehrstufigen Verfahren erfolgen, wobei in mindestens einer Stufe mindestens ein Prepolymer, vorzugsweise ein Hydroxy-terminiertes Prepolymer, aus mindestens einem aliphatischen Diisocyanat I) mit einem Molekulargewicht von 140 g/mol bis 170 g/mol und mindestens einem aliphatischen Diol II) mit einem Molekulargewicht von 62 g/mol bis 120 g/mol gebildet wird. Als weitere Aufbaukomponenten können ein oder mehrere Polyisocyanate III) und / oder ein oder mehrere NCO-reaktive Verbindungen IV) eingesetzt werden. Die Komponenten III) und IV) können dabei in die Prepolymere eingebaut werden, nur aus ihnen Prepolymere erzeugt werden und / oder zur Verknüpfung der Prepolymere verwendet werden. Die Komponenten I), II), gegebenenfalls III) und gegebenenfalls IV) werden jeweils unabhängig voneinander ausgewählt. Die Isocyanat-Komponenten I) und gegebenenfalls III) werden mit den Isocyanatreaktiven-Komponenten II) und gegebenenfalls IV) in einem molaren Verhältnis von Isocyanat-Komponente : Isocyanatreaktiver-Komponente im Bereich von 1,0 : 0,95 bis 0,95 : 1,0 eingesetzt.

Im Rahmen der vorliegenden Erfindung wird unter einem "Hydroxy-terminierten Prepolymer" ein Prepolymergemisch verstanden, in dem mindestens 90 Anzahl-% der Molekülenden eine Hydroxygruppe aufweisen und die verbleibenden 10 Anzahl-% Molekülenden weitere HydroxyGruppen, NCO-Gruppen oder nicht-reaktive Gruppen aufweisen. Unter einer "nicht-reaktiven Gruppe" wird im Rahmen der vorliegenden Erfindung eine Gruppe verstanden, die unter den erfindungsgemäßen Reaktionsbedingungen weder mit NCO-Gruppen, noch mit OH-Gruppen in einer Zeiteinheit reagiert, die der erfindungsgemäßen Reaktionszeit entspricht. Eine nicht-reaktive Gruppe kann beispielsweise aus einer reaktiven NCO-Gruppe oder OH-Gruppe durch Reaktion mit geeigneten Reaktionspartnern (Kettenabbrecher) in eine nicht-reaktive Gruppe umgewandelt werden. Als Kettenabbrecher eignen sich alle monofunktionellen Verbindungen, die unter den erfindungsgemäßen Reaktionsbedingungen entweder mit einer Isocyanatgruppe oder mit einer Hydroxygruppe reagieren, beispielsweise Mono-Alkohole, wie Methanol, Mono-Amine, wie Diethylamin und Monoisocyanate, wie Butylisocyanat. Das Hydroxy-terminierte Prepolymer kann beispielsweise an einem Molekülende eine Hydroxygruppe aufweisen und an dem oder den anderen Molekülenden beispielsweise eine Alkylgruppe. Wenn im Rahmen der vorliegenden Erfindung von einem Hydroxy-terminierten Prepolymer gesprochen wird, ist hiermit auch immer ein Gemisch aus dem mindestens einen Hydroxy-terminierten Prepolymer und einem nicht-reaktiv terminierten Prepolymer umfasst. Ferner kann es sich aufgrund der Statistik der Reaktion abgesehen von Nebenreaktionen auch um ein Gemisch von nicht Hydroxy-terminierten bis zu zweifach Hydroxy-terminierten Prepolymeren handeln. Vorzugsweise handelt es sich überwiegend um ein Gemisch von zweifach Hydroxy-terminierten Prepolymeren. Erfindungsgemäß kann es sich bei dem mindestens einen Hydroxy-terminierten Prepolymer auch um ein Gemisch von mindestens einem Hydroxyterminierten Prepolymer und mindestens einem nicht-reaktiv terminierten Prepolymer handeln.

Das mindestens eine Hydroxy-terminierte Prepolymer kann beispielsweise aus der Gesamtmenge der aliphatischen Diole II) und einer ersten Teilmenge der aliphatischen Diisocyanate I) gebildet werden. In einem oder mehreren darauffolgenden Schritten können dann weitere Teilmengen der aliphatischen Diisocyanate I), d.h. eine zweite, dritte etc. Teilmenge hinzugefügt werden, um weitere erfindungsgemäße, im Mittel höher molekulare, Hydroxy-terminierte Prepolymere aufzubauen. Alternativ kann das mindestens eine Hydroxy-terminierte Prepolymer beispielsweise aus einer ersten Teilmenge der aliphatischen Diole II) und einer ersten Teilmenge der aliphatischen Diisocyanate I) gebildet werden. In einer oder mehreren darauffolgenden Verfahrensstufen können dann weitere Teilmengen der aliphatischen Diole II) und der aliphatischen Diisocyanate I) zugeführt werden, um weitere im Mittel höher molekulare Hydroxy-terminierte Prepolymere aufzubauen.

Die Umsetzung kann mit oder ohne Katalysator durchgeführt werden, allerdings ist eine katalysierte Umsetzung bevorzugt. Als Katalysatoren eigenen sich die oben aufgeführten Katalysatoren. Die Umsetzung kann Lösungsmittelfrei oder in Lösung erfolgen. In Lösung bedeutet, dass zumindest einer der Reaktionspartner in einem Lösungsmittel gelöst ist, bevor er zu dem anderen Reaktionspartner gegeben wird. Vorzugsweise wird die Umsetzung Lösungsmittelfrei durchgeführt. Dabei ist das Verfahren im Sinne der vorliegenden Erfindung noch als lösungsmittelfrei anzusehen, wenn der Gehalt des Lösungsmittels bis 1 Gew.-%, vorzugsweise bis 0,1 Gew.-%, noch bevorzugter bis 0,01 Gew.-% bezogen auf das Gesamtgewicht der Reaktionsmischung beträgt.

Die Temperaturen zur Bildung des mindestens einen Prepolymers, vorzugsweise Hydroxy-terminierten Prepolymers, durch das erfindungsgemäße Verfahren können in Abhängigkeit von den eingesetzten Verbindungen ausgewählt werden. Bevorzugt ist hierbei jedoch, wenn die Umsetzung bei Temperaturen von $\geq 40\,°C$ bis $\leq 260\,°C$, vorzugsweise von $\geq 60\,°C$ bis $\leq 250\,°C$, bevorzugter von $\geq 100\,°C$ bis $\leq 240\,°C$, besonders bevorzugt von $\geq 120\,°C$ bis $\leq 220\,°C$ durchgeführt wird. Dabei wird toleriert, dass das Produkt bei der Umsetzung kurzfristige (< 60 Sekunden) Abweichungen der Reaktionstemperatur von den oben genannten Bereichen erfährt.

Das so erzeugte mindestens eine Prepolymer, vorzugsweise Hydroxy-terminierte Prepolymer, kann beispielsweise in mindestens einer weiteren Verfahrensstufe mit mindestens einem Kettenverlängerer zum thermoplastischen Polyurethanpolymer umgesetzt werden. Dabei können entweder die Gesamtmengen der beiden Komponenten, d.h. des erzeugten mindestens einen Prepolymers, vorzugsweise Hydroxy-terminierten Prepolymers, und des mindestens einen Kettenverlängerers, miteinander in einer Verfahrensstufe umgesetzt werden oder es wird eine Teilmenge der einen Komponenten mit der Gesamtmenge oder einer Teilmenge der anderen Komponente in mehreren Verfahrensstufen umgesetzt. Als Kettenverlängerer können alle oben genannten Polyisocyanate eingesetzt werden. Vorzugsweise werden ein oder mehrere aliphatische Diisocyanate mit einem Molekulargewicht von 140 g/mol bis 170 g/mol als Kettenverlängerer eingesetzt.

Soll das erfindungsgemäße thermoplastische Polyurethanpolymer beispielsweise aromatische Gruppen aufweisen, so können diese beispielsweise durch die Verwendung von aromatischen Diisocyanaten als Kettenverlängerer eingeführt werden. Auch ist es beispielsweise möglich, aromatische Prepolymere zu erzeugen und diese mit den aliphatischen Prepolymeren zu mischen um erfindungsgemäße Polyurethanpolymere mit aromatischen Gruppen aufzubauen.

Die Umsetzung der Komponenten I), II), gegebenenfalls III) und gegebenenfalls IV) kann mit oder ohne Katalysator durchgeführt werden, allerdings ist eine katalysierte Umsetzung weniger bevorzugt. Als Katalysatoren eigenen sich die oben aufgeführten Katalysatoren. Die Umsetzung kann Lösungsmittelfrei oder in Lösung erfolgen. In Lösung bedeutet, dass zumindest einer der Reaktionspartner in einem Lösungsmittel gelöst ist, bevor er zu dem anderen Reaktionspartner gegeben wird. Vorzugsweise wird die Umsetzung Lösungsmittelfrei durchgeführt. Dabei ist das Verfahren im Sinne der vorliegenden Erfindung noch als lösungsmittelfrei anzusehen, wenn der Gehalt des Lösungsmittels bis 1 Gew.-%, vorzugsweise bis 0,1 Gew.-%, noch bevorzugter bis 0,01 Gew.-% bezogen auf das Gesamtgewicht der Reaktionsmischung beträgt.

Die Temperaturen zur Bildung des erfindungsgemäßen thermoplastischen Polyurethanpolymers durch Umsetzung des mindestens einen Prepolymers, vorzugsweise Hydroxy-terminierten Prepolymers, mit dem mindestens einen Kettenverlängerer im erfindungsgemäßen Verfahren können in Abhängigkeit von den eingesetzten Verbindungen ausgewählt werden. Bevorzugt ist hierbei jedoch, wenn die Umsetzung bei Temperaturen von $\geq 60\,°C$ bis $\leq 260\,°C$, vorzugsweise von $\geq 80\,°C$ bis $\leq 250\,°C$, besonders bevorzugt von $\geq 100\,°C$ bis $\leq 245\,°C$ und ganz besonders bevorzugt von $\geq 120\,°C$ bis $\leq 240\,°C$ durchgeführt wird. Dabei wird toleriert, dass das Produkt bei der Umsetzung kurzfristige (< 60 Sekunden) Abweichungen der Reaktionstemperatur von den oben genannten Bereichen erfährt.

Neigt das mindestens eine Prepolymer, vorzugsweise Hydroxy-terminierte Prepolymer, bzw. das thermoplastische Polyurethanpolymer zur Kristallisation und besitzt es einen Schmelzpunkt, so wird die Reaktion bevorzugt in einem Temperaturbereich von 30 K unterhalb bis 150 K oberhalb des Schmelzpunktes, bevorzugt von 15 K unterhalb bis 100 K oberhalb, besonders bevorzugt von 10 K unterhalb bis 70 K oberhalb des Schmelzpunktes des mindestens einen Prepolymers, vorzugsweise Hydroxy-terminierten Prepolymers, bzw. des thermoplastischen Polyurethans durchgeführt.

Die Verfahrensstufen zur Erzeugung des erfindungsgemäßen thermoplastischen Polyurethanpolymers kann in einem einzelnen Apparat oder in einer Vielzahl von Apparaten durchgeführt werden. Beispielsweise kann die Erzeugung des Prepolymers, vorzugsweise Hydroxy-terminierten Prepolymers, zunächst in einem ersten Apparat (z.B. Loop-Reaktor oder kühlbarer Mischer) durchgeführt werden und dann das Reaktionsgemisch in einen weiteren Apparat (z.B. Extruder oder andere Hochviskosreaktoren) überführt werden, um das erfindungsgemäße thermoplastische Polyurethanpolymer zu erzeugen.

In einer bevorzugten Ausführungsform werden das mindestens eine aliphatische Diol II) und das mindestens eine aliphatische Diisocyanat I) in mindestens einem Statikmischer, Dynamikmischer oder Mischer-Wärmeübertrager zum mindestens einen Hydroxy-terminierten Prepolymer umgesetzt.

In einer weiteren bevorzugten Ausführungsform werden das mindestens eine aliphatische Diol II) und das mindestens eine aliphatische Diisocyanat I) in einem Loop-Reaktor (auch Schleifenreaktor genannt) zum mindestens einen Hydroxy-terminierten Prepolymer umgesetzt.

Zur Umsetzung des mindestens einen Prepolymers, vorzugsweise Hydroxy-terminierten Prepolymers, mit dem mindestens einen Kettenverlängerer zum thermoplastischen Polyurethanpolymer ist es erforderlich, das erfindungsgemäße Verfahren auf den exponentiellen Viskositätsanstieg in dieser Phase abzustimmen. Dies wird erreicht indem bevorzugt Apparate eingesetzt werden, in denen das Reaktionsprodukt mit mechanischer Energie aktiv bewegt wird. Besonders bevorzugt werden Apparate eingesetzt, bei denen sich die Werkstoffoberflächen gegenseitig - bis auf Spiele - abreinigen. Solche Apparate sind beispielsweise gleichlaufende Mehrwellenextruder wie Doppel- oder Vierwellenextruder oder Ringextruder, gegenläufige Mehrwellenextruder, Ko-Kneter oder Planetwalzenextruder und Rotor-Stator Systeme. Weitere geeignete Apparate sind ein- oder zweiwellige großvolumige Kneter. Die zweiwelligen großvolumigen Kneter können gleich- oder gegenläufige sein. Beispiele für großvolumige Kneter sind beispielsweise CRP (Fa. List Technology AG), Reacom (Buss-SMS-Canzler GmbH), Reasil (Buss-SMS-Canzler GmbH), KRC kneader (Kurimoto, Ltd). In einer bevorzugten Ausführungsform wird mindestens ein solcher Apparat mit mindestens einem Statikmischer, Dynamikmischer, Loop-Reaktor oder Mischer-Wärmeübertrager kombiniert, wobei in dem Statikmischer, Dynamikmischer, Loop-Reaktor oder Mischer-Wärmeübertrager aus dem mindestens einen aliphatisch Diol II) und dem mindestens einen aliphatischen Diisocyanat I) das mindestens eine Prepolymer, vorzugsweise Hydroxy-terminierten Prepolymer, erzeugt wird. Neigt eine der Komponenten der Reaktionsmischung zur Kristallisation, so wird die Temperatur der Mischung durch geeignete Maßnahmen in einem Temperaturbereich von 30 K unterhalb bis 150 K oberhalb des Schmelzpunktes, bevorzugt von 15 K unterhalb bis 100 K oberhalb, besonders bevorzugt von 10 K unterhalb bis 70 K oberhalb des Schmelzpunktes der bei der höchsten Temperatur schmelzenden Komponente beziehungsweise des bei der höchsten Temperatur schmelzenden Reaktionsproduktes der Komponenten gehalten. Dabei ist die Verweilzeit im Statikmischer, Dynamikmischer, Loop-Reaktor oder Mischer-Wärmeübertrager bevorzugt so kurz, dass der Viskositätsanstieg (bedingt durch die Polyadditions-Reaktion der reaktiven Komponenten miteinander) nicht zu einer Verstopfung des Statikmischers, Dynamikmischers, Loop-Reaktors oder Mischer-Wärmeübertragers führt oder ein Druckaufbau auf < 50 bar, bevorzugt < 30 bar, besonders bevorzugt < 20 bar und ganz besonders bevorzugt < 10 bar begrenzt wird, und das entstehende Gemisch einem Apparat zugeführt wird, der der obigen Liste entspricht.

In einer weiteren bevorzugten Ausführungsform findet die Umsetzung des mindestens einen Prepolymers, vorzugsweise Hydroxy-terminierten Prepolymers, mit dem mindestens einen Kettenverlängerer in einem Extruder statt.

In einer weiteren bevorzugten Ausführungsform findet die Herstellung des erfindungsgemäßen thermoplastischen Polyurethanpolymers in einer Kombination eines Loop-Reaktors mit einem Extruder statt.

In einer weiteren bevorzugten Ausführungsform findet die Herstellung des erfindungsgemäßen thermoplastischen Polyurethanpolymers in einer Kombination eines Statikmischers, Dynamikmischers, Loop-Reaktors oder Mischer-Wärmeübertragers mit einem beheizten Transportband statt.

Im Anschluss an die Umsetzung zum thermoplastischen Polyurethanpolymer wird dieses in eine Handelsform gebracht, typischerweise Granulat. Nach der Umsetzung in der finalen Verfahrensstufe liegt das thermoplastische Polyurethanpolymer im schmelzeflüssigen Zustand vor, wird im Schmelzezustand zerkleinert und durch Abkühlung zum Erstarren gebracht oder zuerst durch Abkühlen zum Erstarren gebracht und anschließend zerkleinert. Dies kann beispielsweise mit den dem Fachmann bekannten Methoden der Stranggranulierung, der Unterwasser-Stranggranulierung, der Wasserringgranulierung und der Unterwassergranulierung geschehen. Die Abkühlung erfolgt bevorzugt mit Wasser; auch eine Abkühlung mit Luft oder anderen Medien ist möglich.

Nach Umsetzung auf einem Bandreaktor kann das erfindungsgemäße thermoplastische Polyurethanpolymer auch abgekühlt, gebrochen und gemahlen werden.

Das so erhaltene erfindungsgemäße thermoplastische Polyurethanpolymer kann erfindungsgemäß in einem Feststoffmischprozess gemischt und in einem weiteren Extruder aufgeschmolzen und wieder granuliert werden. Dies ist vor allem dann bevorzugt, wenn erfindungsgemäße thermoplastische Polyurethanpolymer nach dem Bandreaktor gekühlt und gemahlen wird, weil dieser Vorgang auch die Produktform homogenisiert.

Das erfindungsgemäße Herstellungsverfahren kann kontinuierlich oder diskontinuierlich, d.h. als Batch-Verfahren oder Semi-Batch-Verfahren durchgeführt werden.

Als Kettenverlängerer können abhängig vom gebildeten Prepolymer organische Diole, Diamine und Polyisocyanate eingesetzt werden. Im Fall von NCO-terminierten Prepolymeren eignen sich beispielsweise organische Diole und Diamine mit jeweils einem Molekulargewicht von 60 g/mol bis 120 g/mol. Bevorzugt sind als Kettenverlängerer aliphatische Diole mit einem Molekulargewicht von 62 g/mol bis 120 g/mol, wie beispielsweise 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, 1,2-Ethandiamin und 1,3-Propandiamin. Zur Herstellung des thermoplastischen Polyurethanpolymers wird bevorzugt 1,4-Butandiol als Kettenverlängerer eingesetzt. Im Fall von Hydroxy-terminierten Prepolymeren eignen sich beispielsweise Polyisocyanate mit einem Molekulargewicht von 140 g/mol bis 170 g/mol, vorzugsweise aliphatischen Diisocyanate mit einem Molekulargewicht von 140 g/mol bis 170 g/mol wie beispielsweise 1,4-Diisocyanatobutan, 1,5-Diisocyanatopentan, 1,6-Diisocyanatohexan und 2-Methyl-1,5-diisocyanatopentan. In einer bevorzugten Ausführungsform des zur Herstellung des thermoplastischen Polyurethanpolymers wird 1,6-Diisocyanatohexan und / oder 1,5-Diisocyanatopentan als Kettenverlängerer eingesetzt.

**Komponente B**

Die Zusammensetzung enthält als Komponente B mindestens einen anorganischen Füllstoff ausgewählt aus der Gruppe bestehend aus Graphiten, Bornitrid, Aluminiumoxid, Alumosilikaten, Zinkoxid, Carbonanotubes, Graphen, Carbonfasern, Aluminiumnitrid und Metallfasern. Bevorzugt wird Graphit und/oder Bornitrid eingesetzt, am meisten bevorzugt Graphit.

Graphite werden in Form von Fasern, Stäbchen, Kugeln, Hohlkugeln, Plättchen, in Pulverform, jeweils sowohl in aggregierter als auch in agglomerierter Form, bevorzugt in Plättchenform, in den Zusammensetzungen verwendet. Ebenso können weiter Modifikationen des Kohlenstoffs wie Carbonfasern, Graphen oder Carbonanotubes (CNT) eingesetzt werden.

Unter der plättchenförmigen Struktur wird in der vorliegenden Erfindung ein Partikel verstanden, der eine flache Geometrie aufweist. So ist die Höhe der Partikel üblicherweise deutlich geringer im Vergleich zu der Breite oder Länge der Partikel. Derartige flache Partikel können wiederum zu Gebilden agglomeriert oder aggregiert sein.

Die Höhe der plättchenförmigen Primärpartikel beträgt weniger als 500 nm, bevorzugt weniger als 200 nm und besonders bevorzugt weniger als 100 nm. Durch die kleinen Größen dieser Primärpartikel kann die Form der Partikel gebogen, gekrümmt, gewellt oder andersartig deformiert sein.

Die Längendimensionen der Partikel können durch Standardmethoden, zum Beispiel die Elektronenmikroskopie, ermittelt werden.

Bei dem Graphit handelt es sich bevorzugt um einen expandierten Graphit. Bei den expandierten Graphiten sind die einzelnen Basalebenen des Graphits durch eine spezielle Behandlung auseinandergetrieben, wodurch eine Volumenvergrößerung des Graphits, bevorzugt um den Faktor 200 bis 400, resultiert. Die Herstellung von expandierten Graphiten ist unter anderem in den Schriften US 1,137,373 A, US 1,191,383 A sowie US 3,404,061 A beschrieben.

Erfindungsgemäß bevorzugt wird ein Graphit mit einer relativ hohen spezifischen Oberfläche, ermittelt als BET-Oberfläche mittels Stickstoffadsorption nach ASTM D3037, verwendet. Bevorzugt werden Graphite mit einer BET-Oberfläche von $\geq$ 5 m2/g, besonders bevorzugt $\geq$ 10 m2/g und ganz besonders bevorzugt $\geq$ 18 m2/g in den thermoplastischen Zusammensetzungen eingesetzt.

Der D(0,5) des Graphits, bestimmt durch Siebanalyse gemäß DIN 51938, ist bevorzugt < 1,2 mm.

Bevorzugt haben die Graphite eine Partikelgrößenverteilung, welche durch den D(0,9) charakterisiert wird, von mindestens 1 mm, bevorzugt von mindestens 1,2 mm, weiter bevorzugt von mindestens 1,4 mm und noch weiter bevorzugt von mindestens 1,5 mm.

Ebenfalls bevorzugt haben die Graphite eine Partikelgrößenverteilung, welche durch den D(0,5) charakterisiert wird, von mindestens 400 $\mu$m, bevorzugt von mindestens 600 $\mu$m, weiter bevorzugt von mindestens 750 $\mu$m und noch weiter bevorzugt von mindestens 850 $\mu$m.

Bevorzugt weisen die Graphite eine Partikelgrößenverteilung, welche durch den D(0,1) charakterisiert wird, von mindestens 100 $\mu$m, bevorzugt von mindestens 150 $\mu$m, weiter bevorzugt von mindestens 200 $\mu$m und noch weiter bevorzugt von mindestens 250 $\mu$m auf.

Die Kennzahlen D(0,1), D(0,5) und D(0,9) werden durch Siebanalyse in Anlehnung an DIN 51938 ermittelt.

Die verwendeten Graphite haben eine Dichte, ermittelt mit Xylol, im Bereich von 2,0 g/cm3 bis 2,4 g/cm3, bevorzugt von 2,1 g/cm3 bis 2,3 g/cm3 sowie weiter bevorzugt von 2,2 g/cm3 bis 2,27 g/cm3.

Der Kohlenstoffgehalt der erfindungsgemäß verwendeten Graphite, ermittelt nach DIN 51903 bei 800 °C für 20 Stunden, beträgt vorzugsweise $\geq$ 90 %, weiter bevorzugt $\geq$ 95 % und noch weiter bevorzugt $\geq$ 98%.

Der Restfeuchtigkeitsgehalt der erfindungsgemäß verwendeten Graphite, ermittelt nach DIN 38414 bei 110 °C für 8 Stunden, beträgt vorzugsweise $\leq$ 5 %, weiter bevorzugt $\leq$ 3 % und noch weiter bevorzugt $\leq$ 2 %.

Die thermische Leitfähigkeit der erfindungsgemäß verwendeten Graphite beträgt vor der Verarbeitung parallel zu den Basalebenen zwischen 250 und 400 W/(m*K) sowie senkrecht zu den Basalebenen zwischen 6 bis 8 W(m*K).

Der elektrische Wiederstand der erfindungsgemäß verwendeten Graphite beträgt vor der Verarbeitung parallel zu den Basalebenen ca. 0,001 $\Omega$*cm und ist senkrecht zu den Basalebenen kleiner 0,1 $\Omega$*cm.

Die Schüttdichte der Graphite, ermittelt nach DIN 51705, beträgt üblicherweise zwischen 50 g/l und 250 g/l, bevorzugt zwischen 65 g/l und 220 g/l und weiter bevorzugt zwischen 100 g/l und 200 g/l.

Bevorzugt werden Graphite in den thermoplastischen Zusammensetzungen eingesetzt, welche einen Schwefelgehalt kleiner 200 ppm aufweisen.

Bevorzugt werden außerdem Graphite in den thermoplastischen Zusammensetzungen eingesetzt, welche einen auslaugfähigen Chlorionengehalt kleiner 100 ppm aufweisen.

Ebenfalls bevorzugt werden Graphite in den thermoplastischen Zusammensetzungen eingesetzt, welche einen Gehalt an Nitraten und Nitriten kleiner 50 ppm aufweisen.

Besonders bevorzugt werden Graphite eingesetzt, welche alle diese Grenzwerte, d.h. für den Schwefel-, den Chlorionen-, den Nitrat- und den Nitritgehalt aufweisen.

Kommerziell verfügbare Graphite sind unter anderem Ecophit™ GFG 5, Ecophit™ GFG 50, Ecophit™ GFG 200, Ecophit™ GFG 350, Ecophit™ GFG 500, Ecophit™ GFG 900, Ecophit™ GFG 1200 von der Firma SGL Carbon GmbH, TIMREX™ BNB90, TIMREX™ KS5-44, TIMREX™ KS6, TIMREX™ KS150, TIMREX™ SFG44, TIMREX™ SFG150, TIMREX™ C-THERM™ 001 und TIMREX™ C-THERM™ 011 von der Firma TIMCAL Ltd., SC 20 O, SC 4000 O/SM und SC 8000 O/SM von der Graphit Kropfmühl AG, Mechano-Cond 1, Mechano-Lube 2 und Mechano-Lube 4G von der Firma H.C. Carbon GmbH, Nord-Min 251 und Nord-Min 560T von der Firma Nordmann Rassmann GmbH und ASBURY A99, Asbury 230U und Asbury 3806 von der Firma Asbury Carbons.

Geeignete Carbonanotubes können Multiwall oder Singlewall Strukturen aufweisen. Kommerziell werden sie beispielsweise in Form von Konzentraten unter dem Namen Plasticyl™ (Fa. Nancyl, Belgien) angeboten.

Ein weiterer geeigneter Füllstoff ist Aluminiumoxid $Al_2O_3$. Aus Bauxit kann nach dem Bayer Verfahren Aluminiumhydroxid gewonnen werden und nach Wasserentzug erhält man daraus Aluminiumoxid.

Bevorzugt ist als Korund natürlich vorkommendes Aluminiumoxid.

Bevorzugt haben die $Al_2O_3$ Partikel eine mittlere Partikelgröße d50 von weniger als 150 $\mu$m, weiter bevorzugt weniger als 100 $\mu$m. Weiter bevorzugt liegt die Partikelgröße im Bereich von 5 bis 50$\mu$m. Kommerziell ist Aluminiumoxid beispielsweise erhältlich unter dem Namen SILATHERM™ Next von der Firma Quarzwerke Frechen GmbH

Ein weiterer geeigneter Füllstoff ist Bornitrid.

In den erfindungsgemäßen Zusammensetzungen kann das verwendete Bornitrid ein kubisches Bornitrid, ein hexagonales Bornitrid, ein amorphes Bornitrid, ein partiell kristallines Bornitrid, ein turbostratisches Bornitrid, ein wurtzitisches, ein rhomboedrisches Bornitrid und/oder eine weitere allotrope Form sein, wobei die hexagonale Form bevorzugt ist.

Die Herstellung von Bornitrid ist beispielsweise in den Schriften US 6,652,822 B2, US 2001/0021740 A1, US 5,898,009 A, US 6,048,511 A, US 2005/0041373 A1, US 2004/0208812 A1, US 6,951,583 B2 sowie in WO 2008/042446 A2 beschrieben.

Das Bornitrid wird in Form von Plättchen, Pulvern, Nanopulvern, Fasern sowie Agglomeraten oder einer Mischung zuvor genannter Formen verwendet.

Bevorzugt wird eine Mischung aus diskretem plättchenförmigen Bornitrid und Agglomeraten genutzt.

Ebenfalls bevorzugt werden Bornitride mit einer agglomerierten Partikelgröße (D(0,5)-Wert) von 1 $\mu$m bis 100 $\mu$m, bevorzugt von 3 $\mu$m bis 60 $\mu$m, besonders bevorzugt von 5 $\mu$m bis 30 $\mu$m, ermittelt durch Laserbeugung, genutzt. Bei der Laserbeugung werden Partikelgrößenverteilungen durch Messung der Winkelabhängigkeit der Intensität von gestreutem Licht eines Laserstrahls, der eine dispergierte Partikelprobe durchdringt, ermittelt. Hierbei wird die Mie-Theorie der Lichtstreuung zur Berechnung der Partikelgrößenverteilung verwendet. Der D(0,5)-Wert bedeutet, dass 50 Vol.-% aller vorkommenden Partikel in dem untersuchten Material kleiner sind als der angegebene Wert.

In einer weiteren Ausführungsform der vorliegenden Erfindung werden Bornitride mit einem D(0,5) -Wert von 0,1 $\mu$m bis 50 $\mu$m, bevorzugt von 1 $\mu$m bis 30 $\mu$m, besonders bevorzugt von 3 $\mu$m bis 20 $\mu$m genutzt.

Bornitride werden mit unterschiedlichen Partikelgrößenverteilungen in den erfindungsmäßen Zusammensetzungen eingesetzt. Die Partikelgrößenverteilung wird hierbei als Quotient aus D(0,1)-Wert und D(0,9)-Wert beschrieben.

Verwendung finden Bornitride mit einem D(0,1)/D(0,9) - Verhältnis von 0,0001 bis 0,4, bevorzugt von 0,001 bis 0,2. Besonders bevorzugt werden Bornitride mit einem D(0,1)/D(0,9) - Verhältnis von 0,01 bis 0,15 eingesetzt, was einer sehr engen Verteilung entspricht.

In einer weiteren Ausführungsform der vorliegenden Erfindung werden zwei Bornitride mit unterschiedlicher Partikelgrößenverteilung genutzt, wodurch eine bimodale Verteilung in der Zusammensetzung entsteht.

Bei der Verwendung von hexagonalem Bornitrid werden Plättchen mit einem Aspekt-Verhältnis (mittlerer Plättchendurchmesser dividiert durch Plättchendicke) von $\geq$ 2, bevorzugt $\geq$ 5, besonders bevorzugt $\geq$ 10 genutzt.

Der Kohlenstoffgehalt der verwendeten Bornitride beträgt $\leq$ 1 Gew.-%, bevorzugt $\leq$ 0,5 Gew.-%, besonders bevorzugt $\leq$ 0,1 Gew.-% und ganz besonders bevorzugt $\leq$ 0,05 Gew.-%.

Der Sauerstoffgehalt der verwendeten Bornitride beträgt $\leq$ 1 Gew.-%, bevorzugt $\leq$ 0,5 Gew.-% und besonders bevorzugt $\leq$ 0,4 Gew.-%.

Der Anteil an löslichen Boraten in den verwendeten Bornitriden liegt zwischen 0,01 Gew.-% und 1,00 Gew.-%, bevorzugt zwischen 0,05 Gew.-% und 0,50 Gew.-% und besonders bevorzugt zwischen 0,10 % und 0,30 Gew.-%.

Die Reinheit der Bornitride, das heißt der Anteil an reinem Bornitrid in dem jeweils genutzten Zuschlagstoff, beträgt mindestens 90 Gew.-%, bevorzugt mindestens 95 Gew.-% und weiterhin bevorzugt mindestens 98 Gew.-%.

Die erfindungsgemäß verwendeten Bornitride weisen eine Oberfläche, ermittelt nach dem BET (S. Brunauer, P. H. Emmett, E. Teller) - Bestimmungsverfahren nach DIN-ISO 9277 (Version DIN-ISO 9277:2014-01), von 0,1 $m^2$/g bis 25 $m^2$/g, bevorzugt 1,0 $m^2$/g bis 10 $m^2$/g und besonders bevorzugt 3 $m^2$/g bis 9 $m^2$/g auf.

Die Schüttdichte der Bornitride beträgt vorzugsweise $\leq$ 1 g/$cm^3$, besonders bevorzugt $\leq$ 0,8 g/$cm^3$ und ganz besonders bevorzugt $\leq$ 0,6 g/$cm^3$.

Es werden bevorzugt 1 Gew.-% bis 60 Gew.-%, bevorzugt 5 Gew.-% bis 40 Gew.-%, besonders bevorzugt 8 Gew.-% bis 35 Gew.-%, ganz besonders bevorzugt 10 bis 30 Gew.-% an Bornitrid, besonders bevorzugt ohne jegliche weitere Füllstoffe, in den Zusammensetzungen verwendet.

Beispiele für kommerziell verwendbare Bornitride sind Bornitrid Cooling Filler TP 15/400 von der Firma ESK Ceramics GmbH & Co. KG, HeBoFill™ 511, HeBoFill™ 501, HeBoFill™ 483, HeBoFill™ 482 von der Firma Henze Boron Nitride Products AG und CoolFlow™ CF400, CoolFlow™ CF500, CoolFlow™ CF600 sowie PolarTherm™ PT110 von der Firma Momentive Performance Materials.

Weiterhin können die Bornitride an der Oberfläche modifiziert sein, wodurch die Verträglichkeit der Füllstoffe mit der erfindungsmäßen Zusammensetzung erhöht wird. Geeignete Modifikatoren sind unter anderen organische, beispielsweise Silicium-organische Verbindungen.

Es kann auch ein Bornitrid-Hybridmaterial eingesetzt werden. Bornitrid-Hybridmaterialien sind Kombinationsmaterialien aus Bornitrid und mindestens einer anorganischen Komponente.

Bei dem anorganischen Material des Hybridmaterials handelt es sich um eines aus der Gruppe der Metalloxide, Metallcarbide, Metallnitride oder Metallboride oder Kombinationen dieser. Typischerweise kommen Aluminiumoxid, Titandioxid, Magnesiumoxid, Berylliumoxid, Yttriumoxid, Hafniumoxid, Ceroxid, Zinkoxid, Siliciumcarbid, Titancarbid, Borcarbid, Zirkoniumcarbid, Aluminiumcarbid, Titanwolframcarbid, Tantalcarbid, Aluminiumnitrid, Magnesiumsiliciumnitrid, Titannitrid, Siliciumdioxid, insbesondere Quarz, Siliciumnitrid, Zirconiumborid, Titandiborid, Glasfüllstoff und/oder Aluminiumborid zum Einsatz.

Bevorzugt werden Siliciumdioxid und/oder Zinkoxid, ganz besonders bevorzugt wird Zinkoxid im Bornitrid-Hybridmaterial eingesetzt.

Des Weiteren kommen Silikate, Alumosilikate, Titanate, Mica, Kaoline, kalzinierter Kaolin, Talk, Kalcit, Wollastonit, Ton, Magnesiumcarbonat, Calciumcarbonat, Chalkogenide, Kieselerde, kalzinierte Kieselerde, kryptokristalline Kieselsäure, Zinksulfit, Zeolithe, Bariumsulfat und/oder Calciumsulfat und Kombinationen dieser Füllstoffe zum Einsatz.

Alumosilikate sind Minerale, die sich aus $SiO_4$- Tetraedern und $AlO4$-Tetraedern aufbauen. Dazu zählen beispielsweise Andalusit, Sillimanit, Disthen sowie Staurolith und Topas. Geeignete Korngrößen der Additive liegen bevorzugt im Bereich von etwa 1 bis 50 $\mu$m ($d_{50}$). In einer bevorzugten Ausführungsform zeigen die Körner eine relativ enge Korngrößenverteilung, so dass d90/d50 $\leq$ 3 oder $\leq$ 2 ist.

Kommerziell sind Alumosilikate beispielsweise erhältlich unter dem Namen SILATHERM™ 1466-100 AST, SILATHERM™ 1466-400 AST, SILATHERM™ 1466-600 AST, SILATHERM™ 1466-800 AST von der Firma Quarzwerke Frechen GmbH (Deutschland)

Ein weiterer geeigneter Füllstoff ist Zinkoxid.

Kommerziell ist Zinkoxid beispielsweise erhältlich unter dem Namen SILATHERM™ Advance von der Firma Quarzwerke Frechen GmbH.

Ein weiterer geeigneter Füllstoff ist Aluminiumnitrid.

Kommerziell ist Aluminiumnitrid erhältlich unter dem Namen ANF-F / ANF-S Serie der Firma Maruwa (Japan)

**Komponente C**

Neben den Komponenten A und B und kann die Zusammensetzung als Komponente C weitere von Komponente B und C verschiedene Polymeradditive und/oder weitere polymere Komponenten enthalten.

Bei dem Additiv kann es sich beispielsweise um im Bereich der Thermoplasttechnologie gängige Additive handeln. Selbstverständlich kann es ebenfalls von Vorteil sein, mehrere Additive mehrerer Typen zu verwenden.

Als weitere polymere Komponenten geeignet sind bekannte Thermoplasten oder Mischungen solcher Thermoplaste.

Aus den Komponenten A, B und optional C werden die erfindungsgemäßen thermoplastische Formmassen hergestellt. Die erfindungsgemäßen thermoplastischen Formmassen können beispielsweise hergestellt werden, indem man die jeweiligen Bestandteile der Zusammensetzungen in bekannter Weise vermischt und bei Temperaturen von bevorzugt 185 °C bis 320 °C, besonders bevorzugt bei 190 °C bis 280 °C in üblichen Aggregaten wie beispielsweise Innenknetern, Extrudern und Doppelwellenschnecken schmelzecompoundiert und schmelzeextrudiert. Dieser Prozess wird im Rahmen dieser Anmeldung allgemein als Compoundieren bezeichnet.

Unter Formmasse wird also das Produkt verstanden, das erhalten wird, wenn die Komponenten A, B und optional C schmelzecompoundiert oder schmelzeextrudiert werden.

Die Vermischung der einzelnen Bestandteile der Zusammensetzungen kann in bekannter Weise sowohl sukzessive als auch simultan erfolgen, und zwar sowohl bei etwa 20°C (Raumtemperatur) als auch bei höherer Temperatur. Das bedeutet, dass beispielsweise manche der Bestandteile über den Haupteinzug eines Extruders dosiert und die restlichen Bestandteile über einen Seitenextruder später im Compoundierverfahren zugeführt werden können.

Gegenstand der Erfindung ist auch ein Verfahren zur Herstellung der erfindungsgemäßen Formmassen.

Die erfindungsgemäßen thermoplastischen Formmassen können zur Herstellung von Formkörpern, Folien und / oder Fasern jeder Art verwendet werden. Ein weiterer Gegenstand der Erfindung ist daher ein Formkörper, eine Folie und / oder eine Faser, wobei der Formkörper, die Folie oder die Faser mindestens eine erfindungsgemäße thermoplastische Formmasse umfasst. Diese können beispielsweise durch Spritzguss, Extrusion, insbesondere Rohrextrusion, Blasformverfahren und / oder Schmelzspinnen hergestellt werden. Eine weitere Form der Verarbeitung ist die Herstellung von Formkörpern durch Tiefziehen aus zuvor hergestellten Platten oder Folien.

Es ist auch möglich, die Komponenten A, B, und optional C direkt in eine Spritzgussmaschine oder in ein Extrusionsaggregat zu dosieren und zu Formkörper zu verarbeiten.

Ein weiterer Gegenstand der Erfindung ist die Verwendung der erfindungsgemäßen Formmasse zur Herstellung eines spritzgegossenen Formkörpers, eines extrudierten Formkörpers, einer Folie, einer Faser oder eines 3D gedruckten Formkörpers

Insbesondere sind die folgenden Ausführungsformen bevorzugt:

1. Thermoplastische Formmasse enthaltend

A) mindestens ein thermoplastisches Polyurethanpolymer erhältlich durch die Umsetzung von mindestens folgenden Aufbaukomponenten:

I) einem oder mehreren aliphatischen Diisocyanaten mit einem Molekulargewicht von 140 g/mol bis 170 g/mol und
II) einem oder mehreren aliphatischen Diolen mit einem Molekulargewicht von 62 g/mol bis 120 g/mol,

wobei die zur Erzeugung des thermoplastischen Polyurethanpolymers eingesetzten Aufbaukomponenten zu mindestens 95 Gew.-% aus einem oder mehreren aliphatischen Diisocyanaten I) und einem oder mehreren aliphatischen Diolen II), bezogen auf die Gesamtmasse der eingesetzten Aufbaukomponenten, bestehen, wobei die einen oder mehreren aliphatischen Diisocyanate I) und die einen oder mehreren aliphatischen Diole II) in einem molaren Verhältnis im Bereich von 1,0 : 0,95 bis 0,95 : 1,0 eingesetzt werden, dadurch gekennzeichnet, dass das Verhältnis $\overline{M}_z/\overline{M}_w$ des thermoplastischen Polyurethanpolymers in einem Bereich von 2,3 bis 6 liegt, wobei $\overline{M}_z$ das Zentrifugenmittel der Molmasse und $\overline{M}_w$ das Massenmittel der Molmasse ist, jeweils bestimmt durch Gelpermeationschromatographie in Hexafluoroisopropanol gegen Polymethylmethacrylat als Standard

B) mindestens einen anorganischen Füllstoff ausgewählt aus der Gruppe bestehend aus Graphiten, Bornitrid, Aluminiumoxid, Alumosilikaten, Zinkoxid, Carbonanotubes, Graphen, Carbonfasern, Aluminiumnitrid und Metallfasern.

2. Formmasse gemäß Ausführungsform 1, dadurch gekennzeichnet, dass als Komponente B ein expandierter Graphit eingesetzt wird, wobei der D(0,5) des Graphits, bestimmt durch Siebanalyse gemäß DIN 51938, < 1,2 mm beträgt.

3. Formmasse gemäß Ausführungsform 1, dadurch gekennzeichnet, dass als Komponente B ein Bornitrid mit einem Verhältnis von mittleren Plättchendurchmesser dividiert durch Plättchendicke von ≥ 10 eingesetzt wird.

4. Zusammensetzung gemäß Ausführungsform 1, dadurch gekennzeichnet, dass als Komponente B Korund eingesetzt wird.

5. Formmasse gemäß einer der vorhergehenden Ausführungsformen, weiterhin optional enthaltend als Komponente C Polymeradditive und/oder weitere polymere Komponenten.

6. Formmasse gemäß einer der vorhergehenden Ausführungsformen enthaltend 24 bis 98 Gew.-% der Komponente A, 1 bis 75 Gew.-% der Komponente B und 0 bis 30 Gew.-% der Komponente C.

7. Formmasse gemäß einer der vorhergehenden Ausführungsformen enthaltend 34 bis 96 Gew.-% der Komponente A, 2 bis 65 Gew.-% der Komponente B und 0,1 bis 25 Gew.-% der Komponente C.

8. Formmasse gemäß einer der vorhergehenden Ausführungsformen enthaltend 39 bis 94 Gew.-% der Komponente A, 5 bis 60 Gew.-% der Komponente B und 0,2 bis 20 Gew.-% der Komponente C.

9. Formmasse gemäß einer der vorhergehenden Ausführungsformen, dadurch gekennzeichnet, dass das Verhältnis $\overline{M}_z/\overline{M}_w$ der Komponente A in einem Bereich von 2,5 bis 5,5 liegt.

10. Formmasse gemäß einer der vorhergehenden Ausführungsformen, dadurch gekennzeichnet, dass das Verhältnis $\overline{M}_z/\overline{M}_w$ der Komponente A in einem Bereich von 2,5 bis 5 liegt.

11. Formmasse gemäß einer der vorhergehenden Ausführungsformen, dadurch gekennzeichnet, dass der $\overline{M}_z$-Wert der Komponente A in einem Bereich von 80000 g/mol bis 900000 g/mol liegt, bestimmt durch Gelpermeationschromatographie in Hexafluoroisopropanol gegen Polymethylmethacrylat als Standard.

12. Formmasse gemäß einer der vorhergehenden Ausführungsformen, dadurch gekennzeichnet, dass der $\overline{M}_z$-Wert der Komponente A in einem Bereich von 85000 g/mol bis 760000 g/mol liegt, bestimmt durch Gelpermeationschromatographie in Hexafluoroisopropanol gegen Polymethylmethacrylat als Standard.

13. Formmasse gemäß einer der vorhergehenden Ausführungsformen, dadurch gekennzeichnet, dass die Komponente A zu mindestens 96 Gew.-% aus einem oder mehreren aliphatischen Diisocyanaten 1) und einem oder mehreren aliphatischen Diolen II), bezogen auf die Gesamtmasse des Polyurethanpolymers, besteht.

14. Formmasse gemäß einer der vorhergehenden Ausführungsformen, dadurch gekennzeichnet, dass die Komponente A zu mindestens 99,9 Gew.-% aus einem oder mehreren aliphatischen Diisocyanaten 1) und einem oder mehreren aliphatischen Diolen II), bezogen auf die Gesamtmasse des Polyurethanpolymers, besteht.

15. Formmasse gemäß einer der vorhergehenden Ausführungsformen, dadurch gekennzeichnet, dass das eine oder die mehreren aliphatischen Diisocyanate I) ausgewählt sind aus der Gruppe bestehend aus 1,4-Diisocyanatobutan, 1,5-Diisocyanatopentan, 1,6-Diisocyanatohexan, 2-Methyl-1,5-diisocyanatopentan und / oder Mischungen aus mindestens zwei hieraus, vorzugsweise 1,5-Diisocyanatopentan und / oder 1,6-Diisocyanatohexan.

16. Formmasse gemäß einer der vorhergehenden Ausführungsformen, dadurch gekennzeichnet, dass das eine oder die mehreren aliphatischen Diisocyanate 1) ausgewählt sind aus der Gruppe bestehend aus 1,5-Diisocyanatopentan und / oder 1,6-Diisocyanatohexan.

17. Formmasse gemäß einer der vorhergehenden Ausführungsformen, dadurch gekennzeichnet, dass das eine oder die mehreren aliphatischen Diisocyanat 1) 1,6-Diisocyanatohexan ist.

18. Formmasse gemäß einer der vorhergehenden Ausführungsformen, dadurch gekennzeichnet, dass das eine oder die mehreren aliphatischen Diole II) ausgewählt sind aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol und / oder Mischungen aus mindestens zwei hieraus, vorzugsweise 1,3-Propandiol, 1,4-Butandiol, 1,6-Hexandiol und / oder Mischungen aus mindestens zwei hieraus, besonders bevorzugt 1,4-Butandiol.

19. Formmasse gemäß einer der vorhergehenden Ausführungsformen, dadurch gekennzeichnet, dass das eine oder die mehreren aliphatischen Diole II) ausgewählt sind aus der Gruppe bestehend 1,3-Propandiol, 1,4-Butandiol, 1,6-Hexandiol und / oder Mischungen aus mindestens zwei hieraus, besonders bevorzugt 1,4-Butandiol.

20. Formmasse gemäß einer der vorhergehenden Ausführungsformen, dadurch gekennzeichnet, dass das eine oder die mehreren aliphatischen Diol II) 1,4-Butandiol ist.

21. Formmasse gemäß einer der vorhergehenden Ausführungsformen, dadurch gekennzeichnet, dass die Komponente A einen Urethangruppengehalt von 40 Gew.-% bis 60 Gew.-%, vorzugsweise von 40 Gew.-% bis 52 Gew.-%, bezogen auf das Gesamtgewicht des thermoplastischen Polyurethanpolymers, aufweist.

22. Formmasse gemäß einer der vorhergehenden Ausführungsformen, dadurch gekennzeichnet, dass die Komponente A einen Urethangruppengehalt 40 Gew.-% bis 52 Gew.-%, bezogen auf das Gesamtgewicht des thermoplastischen Polyurethanpolymers, aufweist.

23. Formmasse gemäß einer der vorhergehenden Ausführungsformen, dadurch gekennzeichnet, dass die Komponente A ein mittels Elementaranalyse bestimmtes Gewichtsprozent-Verhältnis von O zu N von $\geq$ 1,5:1 bis $\leq$ 2,6:1 und ein mittels Elementaranalyse bestimmtes Gewichtsverhältnis N zu C von $\geq$ 1:10 bis $\leq$ 1:3 aufweist.

24. Formmasse gemäß einer der vorhergehenden Ausführungsformen, dadurch gekennzeichnet, dass die Komponente A ein semikristallines thermoplastisches Polyurethanpolymer ist.

25. Formmasse gemäß einer der vorhergehenden Ausführungsformen, dadurch gekennzeichnet, dass die Komponente A einen Glasübergangspunkt von < 50 °C, vorzugsweise im Bereich zwischen $\geq$ 0° C und < 50 °C aufweist, bestimmt mit Differential Scanning Calorimetry gemäß DIN EN 61006 (November 2004).

26. Formmasse gemäß einer der vorhergehenden Ausführungsformen, dadurch gekennzeichnet, dass die Komponente A einen Schmelzpunkt von > 140 °C, vorzugsweise im Bereich zwischen 150°C und 200°C, aufweist bestimmt mit Differential Scanning Calorimetry gemäß DIN EN 61006 (November 2004).

27. Formmasse gemäß einer der vorhergehenden Ausführungsformen, dadurch gekennzeichnet, dass zwischen dem Glasübergangspunkt, bestimmt mit Differential Scanning Calorimetry gemäß DIN EN 61006 (November 2004), und dem Schmelzpunkt, bestimmt mit Differential Scanning Calorimetry gemäß DIN EN 61006 (November 2004), der Komponente A mindestens 100° C liegen.

28. Formmasse gemäß einer der vorhergehenden Ausführungsformen, dadurch gekennzeichnet, dass die zur Erzeugung der Komponente A eingesetzten Aufbaukomponenten zu 95 Gew.-% bis 99,9 Gew.-% aus einem oder mehreren aliphatischen Diisocyanaten I) und einem oder mehreren aliphatischen Diolen II) und zu 0,1 Gew.-% bis 5 Gew.-% aus einem oder mehreren Polyisocyanaten III) und / oder einer oder mehreren NCO-reaktive Verbindungen IV) bestehen, bezogen auf die Gesamtmasse der eingesetzten Aufbaukomponenten.

29. Formmasse gemäß einer der vorhergehenden Ausführungsformen, dadurch gekennzeichnet, dass die Komponente A erhalten wird oder erhältlich ist durch die Umsetzung von einem oder mehreren aliphatischen Diisocyanaten mit einem Molekulargewicht von 140 g/mol bis 170 g/mol und einem oder mehreren aliphatischen Diolen mit einem Molekulargewicht von 62 g/mol bis 120 g/mol und mit mindestens einem Kettenverlängerer, wobei in einem ersten Schritt zumindest ein oder mehrere aliphatische Diisocyanate A) mit einem Molekulargewicht von 140 g/mol bis 170 g/mol mit ein oder mehreren aliphatischen Diolen B) mit einem Molekulargewicht von 62 g/mol bis 120 g/mol zu mindestens einem Prepolymer umgesetzt werden, vorzugsweise zu mindestens einem Hydroxy-terminierten Prepolymer, und das im ersten Schritt erhaltende mindestens eine Prepolymer in einem zweiten Schritt mit mindestens einem Kettenverlängerer zum thermoplastischen Polyurethanpolymer umgesetzt wird, wobei die zur Erzeugung des thermoplastischen Polyurethanpolymers eingesetzten Aufbaukomponenten zu mindestens 95 Gew.-% aus einem oder mehreren aliphatischen Diisocyanaten A) und einem oder mehreren aliphatischen Diolen B), bezogen auf die Gesamtmasse der eingesetzten Aufbaukomponenten, bestehen, wobei die einen oder mehreren aliphatischen Diisocyanate A) und die einen oder mehreren aliphatischen Diole B) in einem molaren Verhältnis im Bereich von 1,0 : 0,95 bis 0,95 : 1,0 eingesetzt werden, dadurch gekennzeichnet, dass das Verhältnis $\overline{M}_z/\overline{M}_w$ des thermoplastischen Polyurethanpolymers in einem Bereich von 2,3 bis 6 liegt, wobei $\overline{M}_z$ das Zentrifugenmittel der Molmasse und $\overline{M}_w$ das Massenmittel der Molmasse ist, jeweils bestimmt durch Gelpermeationschromatographie in Hexafluoroisopropanol gegen Polymethylmethacrylat als Standard.

30. Formmasse nach Ausführungsform 29, wobei die Umsetzung in einem Schleifenreaktor (Loop-Reactor) erfolgt.

31. Formmasse gemäß einer der vorhergehenden Ausführungsformen, dadurch gekennzeichnet, dass die Komponente A erhalten wird oder erhältlich ist durch die Umsetzung von einem oder mehreren aliphatischen Diisocyanaten A), mit einem Molekulargewicht von 140 g/mol bis 170 g/mol und einem oder mehreren aliphatischen Diolen B), mit einem Molekulargewicht von 62 g/mol bis 120 g/mol, gegebenenfalls in Gegenwart mindestens eines Katalysators und/ oder Hilfs- und Zusatzstoffen, wobei die zur Erzeugung des thermoplastischen Polyurethanpolymers eingesetzten Aufbaukomponenten zu mindestens 95 Gew.-% aus einem oder mehreren aliphatischen Diisocyanaten A), und einem oder mehreren aliphatischen Diolen B), bezogen auf die Gesamtmasse der eingesetzten Aufbaukomponenten, bestehen, wobei die einen oder mehreren aliphatischen Polyisocyanate und die einen oder mehreren aliphatischen Polyole in einem molaren Verhältnis im Bereich von 1,0 : 0,95 bis 0,95 : 1,0 eingesetzt werden in einem Verfahren umfassend die folgenden Schritte:

Mischen eines Diisocyanatstroms (A) und eines Diolstroms (B) in einer ersten Mischungseinrichtung (7), so dass ein Mischungsstrom (C) erhalten wird, wobei die Massenströme des Diisocyanatstroms (A) und des Diolstroms (B) so eingestellt werden, dass der Isocyanat-Index im Mischungsstrom (C) von 55 bis 85 beträgt,

Einleiten des Mischungsstroms (C) in einen Kreislaufstrom (D), der in einem Kreislauf geführt wird, wobei die Monomere des Diisocyanatstroms (A) und des Diolstroms (B) im Kreislaufstrom (D) zu OH-funktionellen Prepolymeren weiterreagieren,

Abteilen eines Teilstroms vom Kreislaufstrom (D) als Prepolymerstrom (E) und Einleiten desselben in einen Extruder (18),

Einleiten eines Isocyanatzuführungsstroms (F) in den Extruder (18) in Extruderarbeitsrichtung stromabwärts der Einleitung des Prepolymerstroms (E), wobei die Einleitung in der Weise erfolgt, dass die im Prepolymerstrom (E) enthaltenen OH-funktionellen Prepolymere und das im Isocyanatzuführungsstrom (F) enthaltene Polyisocyanat in einem Isocyanat-Index von 85 bis 120 zueinander stehen,

Umsetzen des Prepolymerstroms (E) mit dem Isocyanatzuführungsstrom (F) in dem Extruder (18) unter Erhalt des thermoplastischen Polyurethans (G) als Extrudat,

dadurch gekennzeichnet, dass das Verhältnis $\overline{M}_z/\overline{M}_W$ des thermoplastischen Polyurethanpolymers in einem Bereich von 2,3 bis 6 liegt, wobei $\overline{M}_z$ das Zentrifugenmittel der Molmasse und $\overline{M}_W$ das Massenmittel der Molmasse ist, jeweils bestimmt durch Gelpermeationschromatographie in Hexafluoroisopropanol gegen Polymethylmethacrylat als Standard.

32. Formmasse gemäß einer der vorhergehenden Ausführungsformen bestehend zu mindestens 90 Gew.-% aus den Komponenten A, B und C.

33. Formmasse gemäß einer der vorhergehenden Ausführungsformen bestehend aus den Komponenten A, B und C.

34. Verwendung einer Formmasse gemäß einer der vorhergehenden Ausführungsformen zur Herstellung von Formkörpern.

35. Formkörper enthaltend eine Formmasse gemäß einer der vorhergehenden Ausführungsformen 1 bis 34.

Die Erfindung soll anhand der nachfolgenden Beispiele näher erläutert werden, ohne sie jedoch hierauf zu beschränken.

Zur näheren Erläuterung der Erfindung dienen die nachfolgend erläuterte Abbildung und die Beispiele, wobei diese lediglich Anschauungsbeispiele für bestimmte Ausführungsformen darstellen, nicht jedoch eine Beschränkung des Umfangs der Erfindung. Es zeigen im Einzelnen:

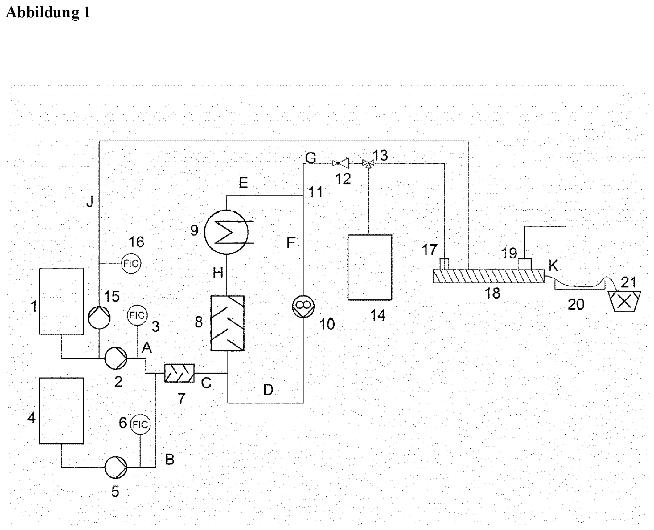

**Abbildung 1:** Bevorzugte Ausführungsform eines Aufbaus zur Durchführung einer zweistufigen kontinuierlichen Herstellung eines erfindungsgemäßen thermoplastischen Polyurethans, durch Reaktionsfolge in Schleifenreaktor und Extruder.

## Beispiele

### Herstellung der Komponente A

Alle Prozentangaben beziehen sich, soweit nichts Anderslautendes vermerkt ist, auf das Gewicht.

Die zur Zeit der Versuchsdurchführung herrschende Umgebungstemperatur von 25 °C wird als RT (Raumtemperatur) bezeichnet.

### Verwendete Rohstoffe:

1,6-Hexamethylendiisocyanat (HDI, Reinheit ≥ 99 Gew.-%) wurde von der Covestro AG bezogen.

1,4-Butandiol (BDO, Reinheit ≥ 99 Gew.-%) wurde von der Firma Ashland bezogen.

Hexafluorisopropanol wurde von der Firma flurochem in einer Reinheit von 99,9 Gew.-% bezogen.

Kaliumtrifluoracetat bezogen von der Firma Aldrich, in einer Reinheit von 98 Gew.-%.

### Gelpermeationschromatographie:

Die Molmassen der Polymere wurden mit Hilfe einer Gelpermeationschromatographie (GPC) bestimmt. Dazu wurde die zu vermessende Probe in einer Lösung von 3 g Kaliumtrifluoracetat in 400 Kubikzentimeter Hexafluorisopropanol aufgelöst (Probenkonzentration ca. 2 mg/Kubikzentimeter). Die jeweiligen GPCs wurden mit folgenden Komponenten bei einer Flussrate von 1 Kubikzentimeter/Minute gemessen:

| | |
|---|---|
| Pumpe: | HPLC-Pumpe 515 (Waters GmbH) |
| Detektor: | Smartline RI-Detektor 2300 (Knauer Wissenschaftliche Geräte) |

(fortgesetzt)

| Säulen: | 1 Vorsäule, 1000 Å PSS PFG 7 $\mu$m, 300 Å PSS PFG 7 $\mu$m, 100 Å PSS PFG 7 $\mu$m in der angegebenen Reihenfolge |
|---|---|
| Entgasung: | Degaser PSS (Polymer Standards Service GmbH) |
| Injektionsvolumen: | 100 Mikroliter |
| Temperatur: | 23 - 25 °C |
| Molmassen-Standard: | Polymethylmethacrylat-Standard-Kit (PSS Polymer Standards Service GmbH) |

$\overline{M}_z$ und $\overline{M}_w$ wurden wie oben angegeben berechnet.

**Differential Scanning Calorimetry (DSC)**

Schmelzpunkte und Glasübergangspunkte wurde mittels DSC (Differential Scanning Calorimetry) mit einem Mettler DSC 12E (Mettler Toledo GmbH, Gießen, DE) entsprechend DIN EN 61006 (November 2004) bestimmt. Eine Kalibrierung erfolgte durch die Temperatur des Schmelz-Onsets von Indium und Blei. Es wurden 10 mg Substanz in Normalkapseln eingewogen. Die Messung erfolgte durch drei Aufheizungen von -50 °C bis +200 °C bei einer Heizrate von 20 K/min mit anschließender Abkühlung mit einer Kühlrate von 20 K/min. Die Kühlung erfolgte durch flüssigen Stickstoff. Als Spülgas wurde Stickstoff verwendet. Die angegebenen Werte basieren jeweils auf der Auswertung der 2. Aufheizkurve.

**Herstellung der Komponente A (Abbildung 1):**

Aus einer 250 - Liter - Vorlage für 1,6-Hexamethylendiisocyanat 1 wurde mit Hilfe einer Zahnringpumpe 2 (Firma HNP, MZR 7255) ein 1,6-Hexamethylendiisocyanat -Strom A zu einem Statikmischer 7 gefördert. Der Durchsatz des 1,6-Hexamethylendiisocyanat -Stroms A wurde mittels eines Massedurchflussmessers 3 (Firma Bronkhorst, Mini Cori-Flow M1X, max. Durchfluss 12 kg/h) gemessen. Aus einer 250 - Liter - Vorlage für 1,4-Butandiol 4 wurde mit Hilfe einer Zahnringpumpe 5 (Firma HNP, MZR 7205) ein 1,4-Butandiol-Strom B zum Statikmischer 7 gefördert. Der Durchsatz des 1,4-Butandiol-Stroms wurde mittels eines Massedurchflussmessers 6 (Firma Bronkhorst, Mini Cori-Flow M1X, max. Durchfluss 8 kg/h) gemessen. Die Temperatur des 1,6-Hexamethylendiisocyanats betrug dabei Raumtemperatur. Die Temperatur des 1,4-Butandiols betrug 40 °C. In dem Statikmischer 7 (Sulzer SMX, Durchmesser 6 mm, Verhältnis von Länge zu Durchmesser L/D = 10) wurden der 1,6-Hexamethylendiisocyanat-Strom A und der 1,4-Butandiol-Strom B miteinander gemischt. Dies ist der Strom C.
Der gemischte und dispergierte Strom C wird in einem Umlauf mit einem umlaufenden Polymerstrom D in einem Statikmischer 8 (Statikmischer äquivalent zu Sulzer SMX, Innendurchmesser 34 mm, L/D=20) zu einem Strom H gemischt. Die Temperatur des Stromes D betrug 182 °C.
Der gemischte und teilweise schon reagierte Strom H wurde in einen temperierbaren statischen Mischer 9 geführt. Dort lief die Reaktion zum großen Teil ab und die entstehende Reaktionswärme wurde abgeführt. Der temperierbare statische Mischer 9 war ähnlich aufgebaut wie ein Sulzer SMR-Reaktor mit innenliegenden, gekreuzten Rohren. Er hatte ein Innenvolumen von 1,9 Litern, eine Wärmeaustauschfläche von 0,44 Quadratmeter. Er war mit Wärmeträgeröl beheizt/gekühlt. Die Heizmitteltemperatur am Eintritt betrug 180 °C.
Aus dem temperierbaren statischen Mischer 9 trat der Produktstrom als weitgehend ausreagierter Strom E mit einer Temperatur von 183 °C aus. Der Strom E wurde an einer Verzweigung 11 in zwei Teilströme F und G aufgespalten. Der Druck des Teilstrom F wurde an einer Zahnradpumpe 10 erhöht. Der Teilstrom F wurde nach der Pumpe zum oben erwähnten Teilstrom D.
Die Zahnradpumpe 10 (Firma Witte Chem 25,6-3), hatte ein Volumen pro Umdrehung von 25,6 Kubikzentimeter und eine Drehzahl von 50 pro Minute.
Die ganze Umlauf war vollgefüllt, und das Polymer zum großen Teil inkompressibel. Daher war der Massenstrom des Stroms G identisch mit dem des Stroms C. Der Strom G bestand aus Oligomer. Der ganze Umlauf bestand aus doppelwandig ausgeführten Rohrleitungen und Apparaten, die mit Thermoöl beheizt waren. Die Heizmitteltemperatur betrug 182 °C.
Hinter dem Druckhalteventil 12 wurde der Strom G an einem Dreiwegeventil 13 vorbeigeführt. Dort konnte es bei An- und Abfahren oder bei Störungen auf einen Abfallbehälter 14, ein offenes 60-Liter-Metallfass mit Absaugung, gefahren werden. Im regulären Betrieb wurde der Strom G auf einen Extruder 18 geleitet.
Aus der 1,6-Hexamethylendiisocyanat-Vorlage 1 wurde mit Hilfe einer Mikrozahnringpumpe 15 (MZR 6355 der Firma HNP) ein 1,6-Hexamethylendiisocyanat-Strom J entnommen. Der Durchsatz des 1,6-Hexamethylendiisocyanat-Stroms J wurde mittels eines Massedurchflussmessers 16 (Firma Bronkhorst, Mini Cori-Flow, M1X, maximaler Durchfluss 2 kg/h) gemessen. Die Temperatur des 1,6-Hexamethylendiisocyanat-Stroms J betrug ebenfalls Raumtemperatur. Dieser Strom wurde ebenfalls auf den Extruder 18 geleitet.

Der Extruder 18 war eine ZSK 26 MC der Firma Coperion, der bei Temperaturen von 200 °C und einer Drehzahl von 66 Umdrehungen pro Minute betrieben wurden. Auf diesem Extruder wurde der Strom G über eine Entlüftung 17, die bei ca. 1 mbar Unterdruck gegenüber dem Umgebungsdruck betrieben wurde, von eventuell mit den Stoffströmen A und B eingeschleppten Inertgasen und möglichen flüchtigen Reaktionsprodukten befreit. Stromab von der Zugabe des Oligomerstroms G wurde der 1,6-Hexamethylendiisocyanat-Strom J zugegeben und die Reaktion zum Polymer durchgeführt. Vor Ende des Extruders wurde der entstehende Polymerstrom über eine Entgasung 19 noch von flüchtigen Bestandteilen befreit. Der Druck in dieser Entgasung betrug 200 mbar unter Umgebungsdruck. Der Polymerstrom K wurde durch zwei Düsen ausgepresst, in einem mit deionisierten Wasser (VE-Wasser) gefüllten Wasserbad 20 abgekühlt und durch einen Granulator 21 zu Granulat zerschnitten.

Tabelle 1 zeigt die Stoffströme, die zur Herstellung der Komponente A verwendet wurden

**Beschreibung der verwendeten Extruderkonfiguration:**

Wenn in der nachfolgenden Beschreibung von "Elementen" die Rede ist, so kann es sich um ein oder mehrere Elemente handeln. Dem Fachmann ist klar, dass Extruderelemente bei gleicher Außenkontur die gleiche Aufgabe erfüllen, unabhängig von der Stückelung.

Für A1:

Eine Dosierung mit Entgasung, gefolgt von rückfördernden Elementen mit einer Länge von 12 mm, einer Förderzone von 48 mm mit Elementen einer Steigung von 48 mm, in der das HDI dosiert wurde, gefolgt von einer Knetzone von 144 mm, einer Förderzone von 32 mm mit Elementen der Steigung 16 mm, eine Zone mit 24 mm Länge mit Förderelementen der Steigung 24 mm, einer Knetzone von 24 mm, einer Förderzone von 248 mm mit Elementen von 16 und 24 mm Steigung, eine Zone mit rückfördernden Elementen von 12 mm Länge, eine Zone mit Förderelementen mit einer Länge von 132 mm mit einer Entgasung und einer Zone von 120 mm Länge mit Förderelementen der Steigung 24 mm als Druckaufbauzone vor der Düse.

Für A2:

Eine Oligomer-Dosierung, gefolgt von einem rückfördernden Elemente der Länge 12 mm und der Steigung 24 mm, gefolgt von einer Entgasungszone der Länge 84 mm mit Elementen der Steigung 48 mm und 24 mm, wobei die Länge der Gehäuseöffnung 50 mm betrug, gefolgt von einem rückfördernden Element der Länge 12 mm, gefolgt von einer Dosierzone mit einem Förderelement, für das HDI der Länge 24 mm mit der Steigung 48 mm, gefolgt von einer Knetzone der Länge 84 mm, eine Zone mit Förderelementen der Steigung 12 mm mit der Länge von 240 mm, einer Zone mit Förderelementen der Steigung 16 mm mit der Länge von 128 mm, eine Zone mit einem rückfördernden Element der Steigung 24 mm mit der Länge 12 mm, eine Zone zur Entgasung mit Förderelementen der Steigung 48 mm mit der Länge 96 mm, an der seitlich die Entgasungsschnecke angebracht war, und eine Zone mit Förderelementen der Steigung 16 mm mit der Länge 96 mm.

**Tabelle 1:** Stoffströme bei der Herstellung der Komponente A

|  | **A1** | **A2** |
|---|---|---|
| Strom A [kg/h] | 2,913 | 4,591 |
| Strom B [kg/h] | 1,999 | 3,000 |
| Strom J [kg/h] | 0,783 | 0,896 |

**Charakterisierung der hergestellten Komponente A**

Es ergaben sich folgende charakteristische Werte für die Molmassenverteilung der eingesetzten Komponenten A1, A2 und A3:

A1:

$\overline{M}_z$ = 283600 /mol

$\overline{M}_w$ = 76100 g/mol, damit $\overline{M}_z$ / $\overline{M}_w$ = 3,73

A2:

$\overline{M}_z$ = 355000g/mol

$\overline{M}_w$ = 80100 g/mol, damit $\overline{M}_z$ / $\overline{M}_w$ = 4,43

Die Komponente A2 weist eine Glasübergangstemperatur Tg von 34 °C und eine Schmelzetemperatur Tm von 183 °C auf.

Die Komponente A2 weist einen Urethangruppengehalt gemäß der oben dargestellten Berechnung von 45 % auf.

**Herstellung des Vergleichsbeispiels 1:**

In einem Rührkessel (250 ml) wurden bei 23 °C 53,02 g 1,4-Butandiol mit 96,92 g HDI verrührt. Anschließend wurde das Reaktionsgefäß mit Stickstoff gespült und unter Rühren (170 Umdrehungen pro Minute, U/min) auf 90 °C geheizt. Nachdem die Innentemperatur des Rührkessels auf 90 °C gestiegen war, wurde die Heizung entfernt. Im Verlauf der nächsten 5 Minuten stieg die Innentemperatur auf 240 °C. Der Versuch wurde beendet als die Reaktionsmischung nicht mehr gerührt werden konnte, da sich das Produkt verfestigt hatte.

**Herstellung des Vergleichsbeispiels 2:**

In einem Rührkessel (250 ml) wurden 53,02 g 1,4-Butandiol für 30 Minuten unter Rühren (170 U/min) und Stickstoffeinleitung auf 90 °C geheizt. Anschließend wurden über einen Zeitraum von 45 Minuten 96,98 g HDI kontinuierlich zu dem Butandiol dosiert. Hierbei wurde die Temperatur des Reaktionsgemisches konstant um 4 °C pro Minute erhöht, bis eine Temperatur von 190 °C erreicht wurde (25 Minuten). Sobald eine Produkttemperatur von 190 °C erreicht wurde, wurde die Geschwindigkeit des Rührers auf 300 U/min erhöht. Die Temperatur im Rührkessel wurde konstant zwischen 190 °C und 200 °C gehalten.

Nach Ende der HDI Dosierung wurde die Schmelze weitere 5 Minuten gerührt. Anschließend wurde sie im heißen Zustand in eine Aluminiumform gegossen.

**Komponenten B und C:**

B: Expandierter Graphit Ecophit™ GFG 900 von der Firma SGL Carbon GmbH (Deutschland) mit einem D(0,5) von 860 μm.

C1: Crodamide™ EBS Wachs (Ethylen bis(stearamid)) als Entformungsmittel

**Herstellung der Probenkörper für die Messung des Biegemoduls:**

Zur Herstellung der Probenkörper (80 mm x 10 mm x 4 mm-Stäbe) wurde Polymergranulat aus der Komponente A1 sowie aus den Vergleichsbeispielen 1 und 2 in einem "Mikro Compounder Model 2005" der Firma DSM Xplore aufgeschmolzen. Die Verarbeitungstemperatur wurde auf 195 °C bei 100 U/min eingestellt. Nach einer Verweilzeit im Extruder von 2 Minuten, wurde die Schmelze in die "Micro 10cc Injection Moulding Maschine" der Firma DSM Xplore überführt. Die Spritzgussform wurde auf 100 °C temperiert. Der Druck beim Spritzgießen wurde auf 6 bar (10 Sekunden) eingestellt. Der Nachdruck betrug 9 bar (10 Sekunden). Die spritzgegossenen Biegestäbe wurden nach 20 Sekunden manuell entformt.

**Bestimmung des Biegemoduls:**

Der Biegemodul wurde an den oben beschriebenen Probekörpern bestimmt, durch einen langsamen Dreipunkt-Biegeversuch bei Raumtemperatur gemäß DIN EN ISO 178 (September 2013), durchgeführt mit einer Universalprüfmaschine 5566 der Firma Instron mit einer Geschwindigkeit von 5 mm/Minute, einem Finnenradius von 5 mm und einer Auflagedistanz von 64 mm.

In Tabelle 2 finden sich Daten für Formmassen enthaltend nur die Komponente A1 sowie die Vergleichsbeispiele 1 und 2. Wie sich aus den Daten erkennen lässt, ergibt sich ein erhöhtes Biegemodul, wenn $\overline{M}_z/\overline{M}_w$ im erfindungsgemäßen Bereich liegt. Damit ist erkennbar, dass dieser Teil der der Erfindung zugrundeliegenden Aufgabe durch Formmassen mit diesem Merkmal gelöst wird.

Tabelle 2: Eigenschaften der thermoplastischen Polyurethane ohne Komponente B oder C

|  | Vergleichs beispiel 1 | Vergleichs beispiel 2 | A1 |
|---|---|---|---|
| Biegemodul [MPa] | 1 605 | 1 619 | 1 790 |
| $\overline{M}_w$ [g/mol] | 153 700 | 45 100 | 76 100 |
| $\overline{M}_z$ [g/mol] | 978 500 | 88 500 | 283 600 |
| $\overline{M}_z/\overline{M}_w$ | 6,37 | 1,96 | 3,73 |

**Herstellung und Prüfung der erfindungsgemäßen Formmassen**

Das Mischen der Komponenten erfolgte auf einem Zweiwellenextruder ZSK-25 der Fa. Coperion bei einer Massetemperatur von 200°C. Die Formkörper wurden bei einer Massetemperatur von 200°C und einer Werkzeugtemperatur von 60°C auf einer Spritzgießmaschine Typ Arburg 270 E hergestellt.

Der elektrische Oberflächenwiederstand und der elektrische Durchgangswiederstand wurden gemäß IEC 62631-3-2 (Version von 2015) an runden Probekörper mit einem Durchmesser von 8 cm einer Dicke von 2 mm gemessen.

Die Wärmeleitfähigkeit wurde gemäß ASTM E 1461 (Version von 2013) an Probekörpern der Dimension 60 x 60x 2mm gemessen.

Die Eigenschaften der erfindungsgemäßen Formmassen sind in Tabelle 2 zusammengefasst. Durch die Zugabe der Komponente B lässt sich eine deutliche Verbesserung der thermischen und elektrischen Leitfähigkeit erreichen.

**Tabelle 2: Zusammensetzungen und ihre Eigenschaften**

| Komponente (Gew.%) |  | V3 | 1 | 2 | 3 | 4 |
|---|---|---|---|---|---|---|
| A2 |  | 99,7 | 79,7 | 69,7 | 59,7 | 49,7 |
| B |  |  | 20 | 30 | 40 | 50 |
| C |  | 0,3 | 0,3 | 0,3 | 0,3 | 0,3 |
| **Elektrischer Widerstand** | IEC 62631-3 |  |  |  |  |  |
| Spezifischer Durchgangswiderstand | $\Omega$ | $2{,}24 \cdot 10^{15}$ | $3{,}86 \cdot 10^{13}$ | $5{,}04 \cdot 10^{7}$ | $5{,}60 \cdot 10^{4}$ | $3{,}23 \cdot 10^{3}$ |
| Spezifischer Oberflächenwiderstand | $\Omega$ | $6{,}65 \cdot 10^{15}$ | $3{,}11 \cdot 10^{11}$ | $3{,}96 \cdot 10^{5}$ | $4{,}71 \cdot 10^{2}$ | $2{,}72 \cdot 10^{1}$ |
| **Wärmeleitfähigkeit** | ASTM E 1461 |  |  |  |  |  |
| Senkrecht zur Spritzrichtung | W/m*K | 0,29 | 0,71 | 1,05 | 1,51 | 1,94 |
| In Spritzrichtung | W/m*K | 0,36 | 4,64 | 10,76 | 15,07 | 23,57 |

**Patentansprüche**

1. Thermoplastische Formmasse enthaltend

    A) mindestens ein thermoplastisches Polyurethanpolymer erhältlich durch die Umsetzung von mindestens folgenden Aufbaukomponenten:

       I) einem oder mehreren aliphatischen Diisocyanaten mit einem Molekulargewicht von 140 g/mol bis 170 g/mol und
       II) einem oder mehreren aliphatischen Diolen mit einem Molekulargewicht von 62 g/mol bis 120 g/mol,

    wobei die zur Erzeugung des thermoplastischen Polyurethanpolymers eingesetzten Aufbaukomponenten zu mindestens 95 Gew.-% aus einem oder mehreren aliphatischen Diisocyanaten I) und einem oder mehreren aliphatischen Diolen II), bezogen auf die Gesamtmasse der eingesetzten Aufbaukomponenten, bestehen, wobei die einen oder mehreren aliphatischen Diisocyanate I) und die einen oder mehreren aliphatischen Diole II) in einem molaren Verhältnis im Bereich von 1,0 : 0,95 bis 0,95 : 1,0 eingesetzt werden, **dadurch gekennzeichnet, dass** das Verhältnis $\overline{M}_z/\overline{M}_w$ des thermoplastischen Polyurethanpolymers in einem Bereich von 2,3 bis 6 liegt, wobei $\overline{M}_z$ das Zentrifugenmittel der Molmasse und $\overline{M}_w$ das Massenmittel der Molmasse ist, jeweils bestimmt durch Gelpermeationschromatographie in Hexafluoroisopropanol gegen Polymethylmethacrylat als Standard B) mindestens einen anorganischen Füllstoff ausgewählt aus der Gruppe bestehend aus Graphiten, Bornitrid, Aluminiumoxid, Alumosilikaten, Zinkoxid, Carbonanotubes, Graphen, Carbonfasern, Aluminiumnitrid und Metallfasern.

2. Formmasse gemäß Anspruch 1, **dadurch gekennzeichnet, dass** als Komponente B ein expandierter Graphit eingesetzt wird, wobei der D(0,5) des Graphits, bestimmt durch Siebanalyse gemäß DIN 51938 in der Version von 2015, < 1,2 mm beträgt.

3. Formmasse gemäß Anspruch 1, **dadurch gekennzeichnet, dass** als Komponente B ein Bornitrid mit einem Verhältnis von mittleren Plättchendurchmesser dividiert durch Plättchendicke von ≥ 10 eingesetzt wird.

4. Zusammensetzung gemäß Anspruch 1, **dadurch gekennzeichnet, dass** als Komponente B Korund eingesetzt wird.

5. Formmasse gemäß einem der vorhergehenden Ansprüche, enthaltend
24 bis 98 Gew.-% der Komponente A,

1 bis 75 Gew.-% der Komponente B und
als Komponente C Polymeradditive und/oder weitere polymere Komponenten in einem Anteil von 0 bis 30 Gew.-%.

6. Formmasse gemäß einem der vorhergehenden Ansprüche, **dadurch gekennzeichnet, dass** die Komponente A in einem Schleifenreaktor hergestellt wird.

7. Formmasse gemäß einem der vorhergehenden Ansprüche, **dadurch gekennzeichnet, dass** der $\overline{M}_z$-Wert der Komponente A in einem Bereich von 80000 g/mol bis 900000 g/mol, vorzugsweise in einem Bereich von 80000 g/mol bis 850000 g/mol, besonders bevorzugt in einem Bereich von 85000 g/mol bis 800000 g/mol und noch bevorzugter in einem Bereich von 85000 g/mol bis 760000 g/mol liegt, bestimmt durch Gelpermeationschromatographie in Hexafluoroisopropanol gegen Polymethylmethacrylat als Standard.

8. Formmasse gemäß einem der vorhergehenden Ansprüche, **dadurch gekennzeichnet, dass** die Komponente A zu mindestens 96 Gew.-%, vorzugsweise zu mindestens 97 Gew.-%, besonders bevorzugt zu mindestens 98 Gew.-%, noch bevorzugter zu mindestens 99 Gew.-%, noch mehr bevorzugter zu mindestens 99,5 Gew.-% und am bevorzugtesten zu mindestens 99,9 Gew.-% aus einem oder mehreren aliphatischen Diisocyanaten I) und einem oder mehreren aliphatischen Diolen II), bezogen auf die Gesamtmasse des Polyurethanpolymers, besteht.

9. Formmasse gemäß einem der vorhergehenden Ansprüche, **dadurch gekennzeichnet, dass** das eine oder die mehreren aliphatischen Diisocyanate I) ausgewählt sind aus der Gruppe bestehend aus 1,4-Diisocyanatobutan, 1,5-Diisocyanatopentan, 1,6-Diisocyanatohexan, 2-Methyl-1,5-diisocyanatopentan und / oder Mischungen aus mindestens zwei hieraus, vorzugsweise 1,5-Diisocyanatopentan und / oder 1,6-Diisocyanatohexan.

10. Formmasse gemäß einem der vorhergehenden Ansprüche, **dadurch gekennzeichnet, dass** das eine oder die mehreren aliphatischen Diole II) ausgewählt sind aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol und / oder Mischungen aus mindestens zwei hieraus, vorzugsweise 1,3-Propandiol, 1,4-Butandiol, 1,6-Hexandiol und / oder Mischungen aus mindestens zwei hieraus, besonders bevorzugt 1,4-Butandiol.

11. Formmasse gemäß einem der vorhergehenden Ansprüche, **dadurch gekennzeichnet, dass** die Komponente A einen Urethangruppengehalt von 40 Gew.-% bis 60 Gew.-%, vorzugsweise von 40 Gew.-% bis 52 Gew.-%, bezogen auf das Gesamtgewicht des thermoplastischen Polyurethanpolymers aufweist.

12. Formmasse gemäß einem der vorhergehenden Ansprüche, **dadurch gekennzeichnet, dass** die Komponente A ein semikristallines thermoplastisches Polyurethanpolymer ist.

13. Formmasse gemäß nach einem der vorhergehenden Ansprüche, **dadurch gekennzeichnet, dass** die zur Erzeugung der Komponente A eingesetzten Aufbaukomponenten zu 95 Gew.-% bis 99,9 Gew.-% aus einem oder mehreren aliphatischen Diisocyanaten I) und einem oder mehreren aliphatischen Diolen II) und zu 0,1 Gew.-% bis 5 Gew.-% aus einem oder mehreren Polyisocyanaten III) und / oder einer oder mehreren NCO-reaktive Verbindungen IV) bestehen, bezogen auf die Gesamtmasse der eingesetzten Aufbaukomponenten.

14. Verwendung einer Formmasse gemäß einem der vorhergehenden Ansprüche zur Herstellung von Formkörpern.

15. Formkörper enthaltend eine Formmasse gemäß einem der Ansprüche 1 bis 13.

**Abbildung 1**

Europäisches Patentamt

European Patent Office

Office européen des brevets

**Nummer der Anmeldung**

EP 21 17 9959

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 4 062 834 A (GILDING DENIS KEITH ET AL) 13. Dezember 1977 (1977-12-13) * Beispiele I-IV; Tabelle 1 * ----- | 1-15 | INV. C08G18/08 C08G18/10 C08G18/32 C08G18/73 C08K3/04 |
| A | US 2015/232606 A1 (WAMPRECHT CHRISTIAN [DE] ET AL) 20. August 2015 (2015-08-20) * Absatz [0056]; Ansprüche 18-34; Tabellen 1, 2; Verbindungen TPU 1, 2 * ----- | 1-15 | |

RECHERCHIERTE SACHGEBIETE (IPC)

C08G
C08K

Der vorliegende Recherchenbericht wurde für alle Patentansprüche erstellt

| Recherchenort | Abschlußdatum der Recherche | Prüfer |
|---|---|---|
| München | 9. November 2021 | Sütterlin, Martin |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

 
& : Mitglied der gleichen Patentfamilie, übereinstimmendes
    Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 21 17 9959

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-11-2021

| Im Recherchenbericht angeführtes Patentdokument | Datum der Veröffentlichung | Mitglied(er) der Patentfamilie | Datum der Veröffentlichung |
|---|---|---|---|
| US 4062834 A | 13-12-1977 | AT 339048 B | 26-09-1977 |
| | | AU 6857274 A | 06-11-1975 |
| | | CA 1052940 A | 17-04-1979 |
| | | CS 199560 B2 | 31-07-1980 |
| | | DE 2423281 A1 | 05-12-1974 |
| | | DK 138395 B | 28-08-1978 |
| | | ES 426327 A1 | 01-09-1976 |
| | | FI 149974 A | 17-11-1974 |
| | | FR 2229727 A1 | 13-12-1974 |
| | | HU 177199 B | 28-08-1981 |
| | | IN 141398 B | 26-02-1977 |
| | | JP S574651 B2 | 27-01-1982 |
| | | JP S5016800 A | 21-02-1975 |
| | | NL 7406591 A | 19-11-1974 |
| | | NO 137504 B | 28-11-1977 |
| | | PH 11365 A | 08-11-1977 |
| | | PL 101226 B1 | 30-12-1978 |
| | | SE 415479 B | 06-10-1980 |
| | | US 4062834 A | 13-12-1977 |
| | | ZA 743106 B | 31-12-1975 |
| US 2015232606 A1 | 20-08-2015 | BR 112015008500 A2 | 04-07-2017 |
| | | CN 104837885 A | 12-08-2015 |
| | | DE 102012218846 A1 | 17-04-2014 |
| | | EP 2909248 A2 | 26-08-2015 |
| | | RU 2015118231 A | 10-12-2016 |
| | | US 2015232606 A1 | 20-08-2015 |
| | | WO 2014060348 A2 | 24-04-2014 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 728981
- EP 0403921 B
- US 1137373 A
- US 1191383 A
- US 3404061 A
- US 6652822 B2
- US 20010021740 A1
- US 5898009 A
- US 6048511 A
- US 20050041373 A1
- US 20040208812 A1
- US 6951583 B2
- WO 2008042446 A2

**In der Beschreibung aufgeführte Nicht-Patentliteratur**

- **O. BAYER.** *Angew. Chem.,* 1947, vol. 59, 257-288
- **V. V. KORSHAK.** *Soviet Plastics,* 1961, vol. 7, 12-15
- **G. OERTEL.** Kunststoff-Handbuch. 1993, vol. 7, 12ff
- Methoden der organischen Chemie. HOUBEN-WEYL. Georg Thieme Verlag, 1987, vol. E20, 1587-1593
- Justus Liebigs Annalen der Chemie. 1949, vol. 562, 75-136
- *Firma Witte Chem,* vol. 25, 6-3
- *Mikro Compounder Model,* 2005